(19) Europäisches Patentamt
European Patent Office
Office européen des brevets

(11) EP 3 585 830 B1

(12) EUROPEAN PATENT SPECIFICATION

(45) Date of publication and mention of the grant of the patent:
**27.09.2023 Bulletin 2023/39**

(21) Application number: **18703776.7**

(22) Date of filing: **07.02.2018**

(51) International Patent Classification (IPC):
***C08J 7/06*** *(2006.01)* ***B05D 7/02*** *(2006.01)*

(52) Cooperative Patent Classification (CPC):
**C08J 7/065;** C08J 2381/06

(86) International application number:
**PCT/EP2018/053003**

(87) International publication number:
**WO 2018/153665 (30.08.2018 Gazette 2018/35)**

(54) **UV-STABILIZER SOLUTION FOR TREATING THE SURFACE LAYER OF A POLYMER ARTICLE**

UV-STABILISATORLÖSUNG ZUR BEHANDLUNG DER OBERFLÄCHENSCHICHT EINES POLYMERARTIKELS

SOLUTION DE STABILISANT UV POUR LE TRAITEMENT DE LA COUCHE DE SURFACE D'UN ARTICLE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017 US 201762463205 P**
**20.04.2017 EP 17167420**

(43) Date of publication of application:
**01.01.2020 Bulletin 2020/01**

(73) Proprietor: **Solvay Specialty Polymers USA, LLC**
**Alpharetta, Georgia 30005-3914 (US)**

(72) Inventors:
- **POLLINO, Joel**
  **John Creeks, Georgia 30022 (US)**
- **JEOL, Stéphane**
  **Cumming, Georgia 30041 (US)**
- **SCHWARTZ, Jonathan**
  **Atlanta, GA 30327 (US)**
- **APOSTOLO, Marco**
  **20030 Senago (MI) (IT)**

(74) Representative: **Lederer & Keller Patentanwälte Partnerschaft mbB**
**Unsöldstraße 2**
**80538 München (DE)**

(56) References cited:
**US-A- 4 636 408 US-A- 5 071 592**

- **P.K. DAS ET AL: "Photostabilization of poly (p-phenylene sulfide)", POLYMER DEGRADATION AND STABILITY, vol. 48, no. 1, 1 January 1995 (1995-01-01), pages 1-10, XP055412854, GB ISSN: 0141-3910, DOI: 10.1016/0141-3910(95)00032-H**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Related applications

This application claims priority to U.S. provisional patent application No. 62/463,205, filed on February 24, 2017 and to European patent application No. 17167420.3, filed on April 20, 2017.

### Technical Field

The present invention relates to a process for treating the surface of a polymer article with a UV-stabilizer solution which comprises an effective amount of a UV-absorber compound dissolved in a solvent, and optionally a radical scavenger. The present invention also relates to a process for preparing a UV-stabilized polymer article which comprises a step consisting in contacting the surface layer of a polymer article with the UV stabilizer solution. The present invention also provides UV-stabilized polymer articles, that-is-to-say polymer articles which are resistant to color change upon exposure to UV light. The treatment process of the present invention is very well-suited for injection molded or extruded parts, which will then for example be exposed to outdoor or indoor light. The polymer articles can be used in the following applications: electronic or electronic devices, automotive parts, aeronautic parts, sporting equipment, face shields, lenses and architectural components.

### Background Art

Exposure to UV light is known to adversely impact the properties of polymers, including notably decrease of mechanical properties, yellowing, loss of gloss and discolouring. These effects are particularly observed in polymeric substrates containing aromatic moieties, which are sensitive to UV radiation, up to wavelengths of approximately 420 nm.

To avoid, or at least limit, the detrimental impact of UV radiation, polymeric compositions require photostabilization which may be achieved by including a UV-absorber in the polymer composition. UV-absorbers are molecules designed to convert photochemical energy into heat energy, thereby serving as photon inhibitors. These compounds are designed to absorb UV radiation more efFiciently than the polymers that they protect. UV-absorbers can be categorized by their chemical structure and include for example 2-hydroxy benzotriazoles, 2-hydroxy benzophenones, and 2-hydroxy triazines. Each molecule possesses its own UV absorbance characteristics (e.g. magnitude of extinction coefFicient and position lambda max).

Incorporating UV-absorbers into a polymer by melt compounding results in the UV-absorbers being homogeneously distributed throughout the polymer volume. In general, the higher the amount of UV-absorbers is incorporated into a polymer, the better the UV-stabilization is. However, there exists an upper limit to how much UV-absorbers can be compounded into a polymer composition before adverse reduction in the mechanical properties of the polymer (e.g. impact strength or elongation at break). In addition, the majority of the UV-absorber compounds are positioned inside the molded article instead of at the surface where the most of the photodegradation occurs. This is especially true for most aromatic polymers because they possess chromophores that are highly efficient at absorbing UV light. In these systems, almost all of the UV light is captured at the outermost surface layer (10$\mu$m depth) before ever reaching the inner part of the molded article.

Another possibility to limit the impact of UV radiation consists in impregnating the surface layer of the polymer article with UV-absorbers. The impregnating methods of the prior art, also called infusion methods or penetration methods, are described in relation to certain polymers and their efficiency depends on several parameters that characterized the polymer material to be treated, such as the degree of crystallinity of the polymer or the susceptibility of the polymer to UV radiation. The impregnating methods also sometimes suffer from the fact that the polymer article surface must be heated to the melting point to allow the UV absorbers to diffuse into the polymer surfaces.

The process of the present invention is a process for treating at least one surface of a polymer article with a UV-absorber solution, the polymer material being for example selected from the group consisting of poly(aryl ether ketone) (PAEK), poly(aryl ether sulfone) (PAES) and polyarylene sulfide (PAS). The process of the present invention is also characterized by the fact that the process does not necessarily need a heating step. According to this process, the UV-absorbers, optionally with radical scavengers, are positioned in the surface layer of the polymer article.

### Summary of invention

The present invention relates to a process, continuous or sequential, for treating the surface of a polymer article with a UV-stabilizer solution which comprises an effective amount of a UV-absorber compound dissolved in a solvent, and optionally a radical scavenger.

The UV-stabilizer solution of the present invention comprises:

a) from 1.5 to 15 mol. % of at least one UV-absorber compound (UV) selected from the group consisting of

a1) a 2-hydroxybenzotriazole compound of formula (I):

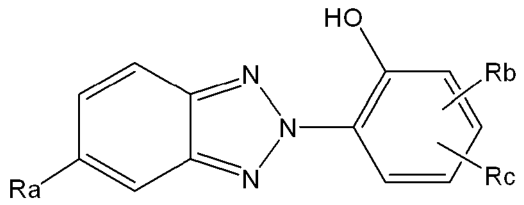

(I)

in which

$R_a$ is H; halogen; C1-C4 alkyl; C1-C4 alkoxy; or -COOR$_d$; and
$R_b$, $R_c$ and $R_d$, independently from one another, are H; C1-C24 alkyl; C7-C16 alkylphenyl; or C5-C12 cycloalkyl;

a2) a 2-hydroxy phenyl triazine compound of formula (II):

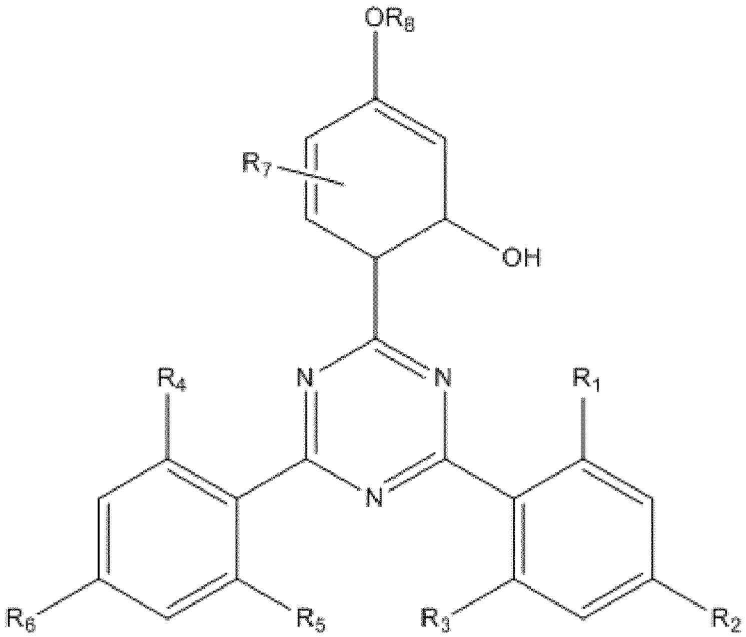

(II)

in which

$R_1$ to $R_6$ independently from one another, are H; OH; C1-C12 alkyl; C2-C6 alkenyl; C1-C12 alkoxy; C2-C18 alkenoxy; halogen; trifluoromethyl; C7-C11 phenylalkyl; phenyl; phenyl which is substituted by C1-C18 alkyl, C1-C18 alkoxy or halogen; phenoxy; phenoxy which is substituted by C1-C18 alkyl, C1-C18 alkoxy or halogen; C1-C18 alkoxy; C1-C18 alkoxy which is substituted by -COOR$_7$ or OH;
$R_7$ is H; C1-C24 alkyl; C7-C16 alkylphenyl; or C5-C12 cycloalkyl; and
$R_8$ is H; C1-C18 alkyl; or C1-C18 alkoxy which may substituted by - COOR$_7$ or OH; and

a3) a 2-hydroxy benzophenone of formula (III):

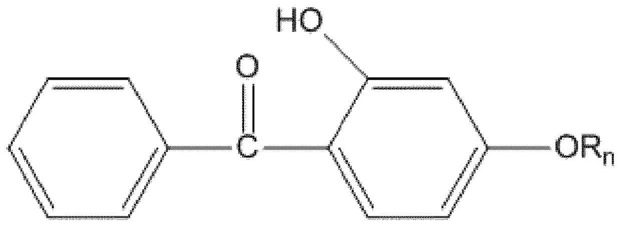

(III)

in which $R_n$ is H; or C1-C24 alkyl;

b) at least one solvent selected from the group consisting of dimethylformamyde (DMF), N-Methyl-2-pyrrolidone (NMP), dimethylacetamide (DMAc) and tetrahydrofuran (THF), preferably THF,
c) optionally a radical scavenger compound (RS).

The present invention also relates to a process for preparing a UV-stabilized polymer article which comprises a step consisting in contacting the surface layer of a polymer article with the UV stabilizer solution.
The present invention also provides UV-stabilized polymer articles, that-is-to-say polymer articles which are resistant to color change upon exposure to UV light.
The present invention also relates to the use of the UV-absorber solution to treat the surface layer of polymer articles, for example polymer articles made at least in part from a polymer composition (C) comprising a polymer selected from the group consisting of poly(aryl ether ketone) (PAEK), poly(aryl ether sulfone) (PAES) and polyarylene sulfide (PAS).

**Description of embodiments**

The present invention relates to a process for treating the surface of a polymer article comprising a step consisting in contacting the surface of the article with a UV-stabilizer solution. The UV-stabilizer solution of the invention comprises at least one UV-absorber, a solvent and optionally a radical scavenger. The expression "UV-absorber" or "UV-absorber compound" is used within the context of the present invention according to its usual meaning, i.e. to designate an organic compound possessing absorption bands in the region ranging from 250 to 400 nm. The expression "radical scavenger" or "radical scavenger compound" is used within the context of the present invention to designate an organic compound capable of reacting with a radical formed during the degradation of the polymer.
The expression "treating" or "treatment" is used within the context of the present invention according to its usual meaning and encompasses any process and technology that can be used to incorporate the UV-absorber compounds (UV), possibly the radical scavenger compounds (RS), within the layer surface of the polymer article.
The process of the present invention comprises an essential step which consists in contacting at least one surface of a polymer article with the UV-absorber solution. The contact step can be implemented by any means, such as for example by coating, spraying or immersion. According to the present invention, the process of treating the layer of the polymer article can be continuous or sequential.
The treatment can last from a few seconds to several hours depending notably on the degree of crystallinity of the polymer material, the shape of the article, and the UV-susceptibility of the polymer article as defined below. The contacting step can, for example, be 10 to 60 second long. The treatment advantageously takes place at room temperature, but can also take place below or above room temperature. According to an embodiment, the step of contacting occurs between 10 and 30°C, for example between 15 and 25°C.
The process of the present invention may also further comprise one step or several steps consisting of rinsing the surface of the polymer article and/or one step or several steps consisting of drying the article.
According to an embodiment, the process of the present invention does not comprise a step of heating the polymer article, for example at a temperature higher than 30°C.
The UV-stabilizer solution
The UV-stabilizer solution of the present invention comprises:

a) from 1.5 to 15 mol. % of at least one UV-absorber compound (UV) selected from the group consisting of

a1) a 2-hydroxyphenyl benzotriazole compound of formula (I):

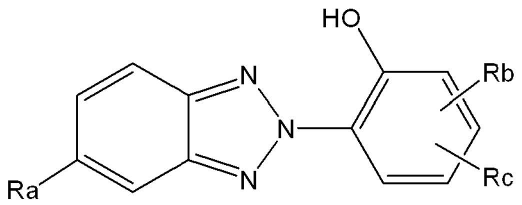

(I)

in which

$R_a$ is H; Cl; C1-C4 alkyl; C1-C4 alkoxy; or-$COOR_d$; and
$R_b$, $R_c$ and $R_d$, independently from one another, are H; C1-C24 alkyl; C7-C16 alkylphenyl; or C5-C12 cycloalkyl;

a2) a 2-hydroxy phenyl triazine compound of formula (II):

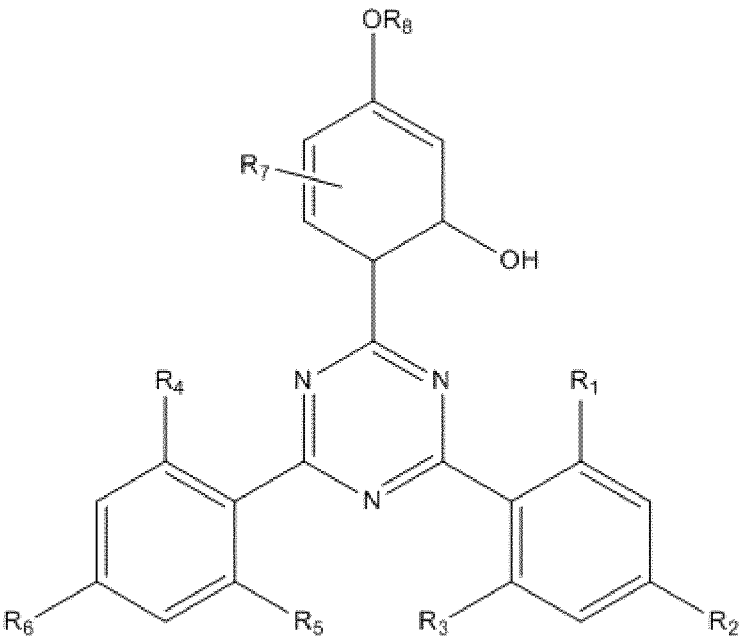

(II)

in which

$R_1$ to $R_6$ independently from one another, are H; OH; C1-C12 alkyl; C2-C6 alkenyl; C1-C12 alkoxy; C2-C18 alkenoxy; halogen; trifluoromethyl; C7-C11 phenylalkyl; phenyl; phenyl which is substituted by C1-C18 alkyl, C1-C18 alkoxy or halogen; phenoxy; phenoxy which is substituted by C1-C18 alkyl, C1-C18 alkoxy or halogen; C1-C18 alkoxy; C1-C18 alkoxy which is substituted by -$COOR_7$ or OH;
$R_7$ is H; C1-C24 alkyl; C7-C16 alkylphenyl; or C5-C12 cycloalkyl; and
$R_8$ is H; C1-C18 alkyl; or C1-C18 alkoxy which may substituted by - $COOR_7$ or OH;

a3) a 2-hydroxy benzophenone of formula (III):

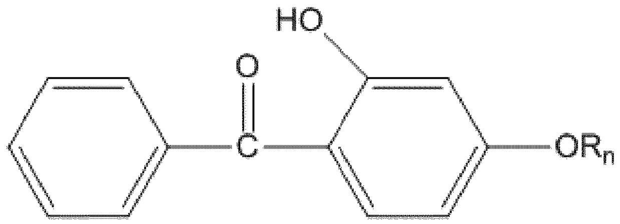

(III)

in which $R_n$ is H; or C1-C24 alkyl;

b) at least one solvent selected from the group consisting of dimethylformamyde (DMF), N-Methyl-2-pyrrolidone (NMP), dimethylacetamide (DMAc) and tetrahydrofuran (THF),
c) optionally a radical scavenger compound (RS),

The amount of UV-absorber compounds (UV) used in the UV-stabilizer solution of the present invention ranges from 1.5 to 15 mol. %, based on the total number of moles of the solution.

According to an embodiment, the amount of UV-absorber compounds (UV) used in the UV-stabilizer solution of the present invention ranges from 2 to 10 mol. % or from 2.2 to 8 mol. %, based on the total number of moles of the solution.

The UV-stabilizer solution of the present invention can comprise one UV-absorber compound (UV) or more than one, for example two or three distinct UV-absorber compound (UV). The UV-stabilizer solution of the present invention can for example comprise one UV-absorber compound of formula (I) and one UV-absorber compound of formula (II).

The amount of radical scavenger compounds (RS), which can be used in the UV-stabilizer solution of the present invention, can range from as little as 0.01 mol. % to 15 mol. %, based on the total number of moles of the solution. In other words, moles % is hereby defined as moles of solvent, moles of UV-absorber compounds and moles of radical scavenger compounds.

According to an embodiment, the amount of radical scavenger compounds (RS) used in the UV-stabilizer solution of the present invention ranges from 0.1 to 10 mol. %, from 0.5 to 8 mol. %, or from 0.8 to 5 mol. %, based on the total number of moles of the solution.

The UV-stabilizer solution of the present invention can comprise one radical scavenger compound (RS) or more than one, for example two or three distinct radical scavenger compounds (RS).

*The 2-hydroxy benzotriazole compound*

According to an embodiment, the UV-absorber compound (UV) of the UV-stabilizer solution is a 2-hydroxyphenyl benzotriazole compound of formula (I):

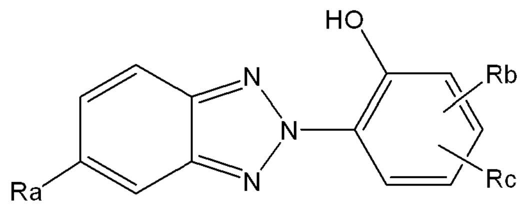

(I)

in which

$R_a$ is H; Cl; C1-C4 alkyl; C1-C4 alkoxy; or $-COOR_d$; and
$R_b$, $R_c$ and $R_d$, independently from one another, are H; C1-C24 alkyl;
C7-C16 alkylphenyl; or C5-C12 cycloalkyl.

According to another embodiment, the UV-absorber compound (UV) of the UV-stabilizer solution is a phenyl benzotriazole compound of formula (I):

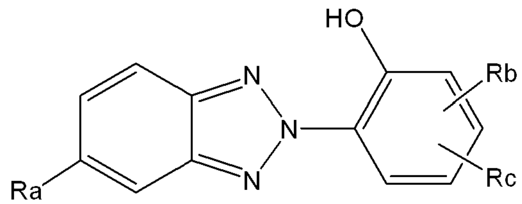

(I)

in which

$R_a$ is H; or Cl; and
$R_b$ and $R_c$, independently from one another, are H; C1-C24 alkyl; or C7-C16 alkylphenyl.

The UV-stabilizer solution of the present invention can comprise one 2-hydroxyphenyl benzotriazole compound formula (I) or more than one, for example two or three distinct 2-hydroxyphenyl benzotriazole compounds formula (I).

According to another embodiment, the UV-absorber compound (UV) of the UV-stabilizer solution is selected from the group consisting of compound of formula (IA), (IB) and (IC) below:

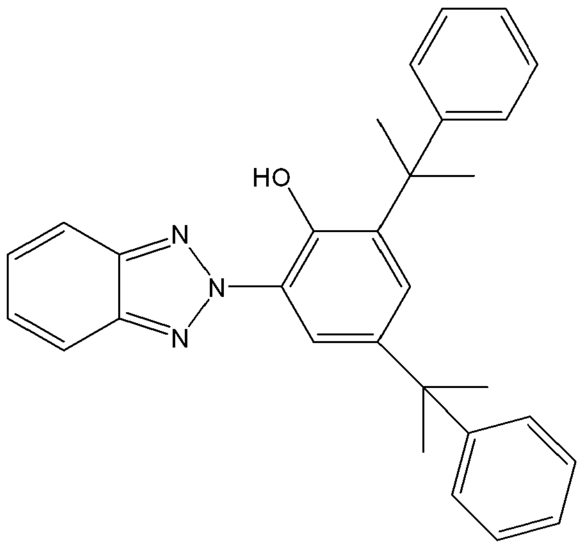

(IA)

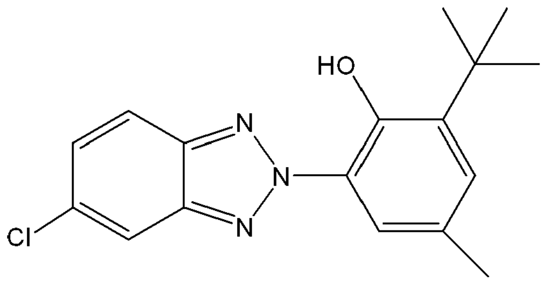

(IB)

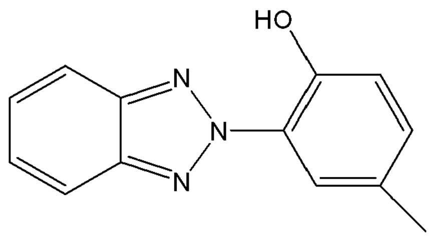

(IC)

According to an embodiment, the 2-hydroxyphenyl benzotriazole compound is a compound of formula (IA), (IB) or (IC) above. These compounds are notably commercially available under the trade names Tinuvin® 234, Tinuvin® 326 and Tinuvin® P from BASF.

Other phenyl benzotriazole compounds are also commercially available under the trade names Tinuvin® 329, Tinuvin® 328, Tinuvin® 360 and Tinuvin® 320 from BASF.

*The 2-hydroxy phenyl triazine compound*

According to an embodiment, the UV-absorber compound (UV) of the UV-stabilizer solution is a 2-hydroxy phenyl triazine compound of formula (II):

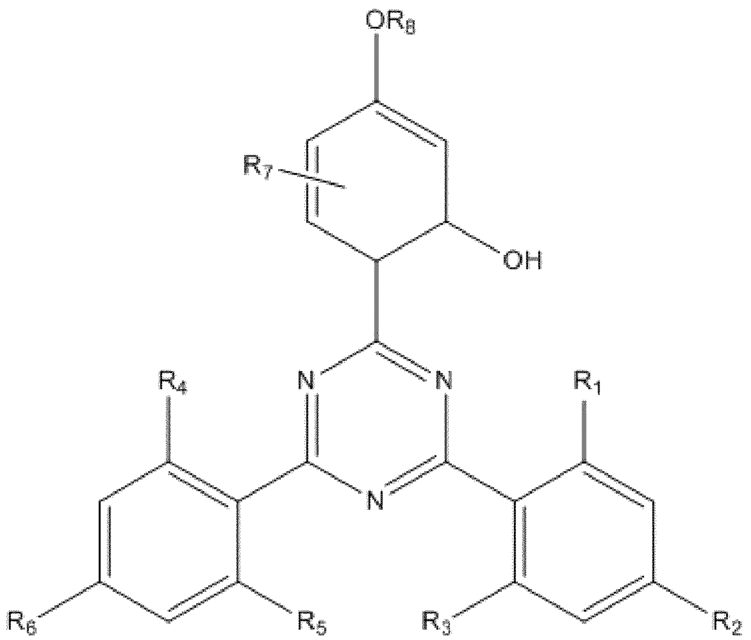

(II)

in which

$R_1$ to $R_6$ independently from one another, are H; OH; C1-C12 alkyl; C2-C6 alkenyl; C1-C12 alkoxy; C2-C18 alkenoxy; halogen; trifluoromethyl; C7-C11 phenylalkyl; phenyl; phenyl which is substituted by C1-C18 alkyl, C1-C18 alkoxy or halogen; phenoxy; phenoxy which is substituted by C1-C18 alkyl, C1-C18 alkoxy or halogen; C1-C18 alkoxy; C1-C18 alkoxy which is substituted by $-COOR_7$ or OH;
$R_7$ is H; C1-C24 alkyl; C7-C16 alkylphenyl; C5-C12 cycloalkyl;
$R_8$ is H; C1-C18 alkyl; C1-C18 alkoxy which may substituted by $-COOR_7$ or OH;

According to another embodiment, the UV-absorber compound (UV) of the UV-stabilizer solution is a 2-hydroxy phenyl triazine compound of formula (II):

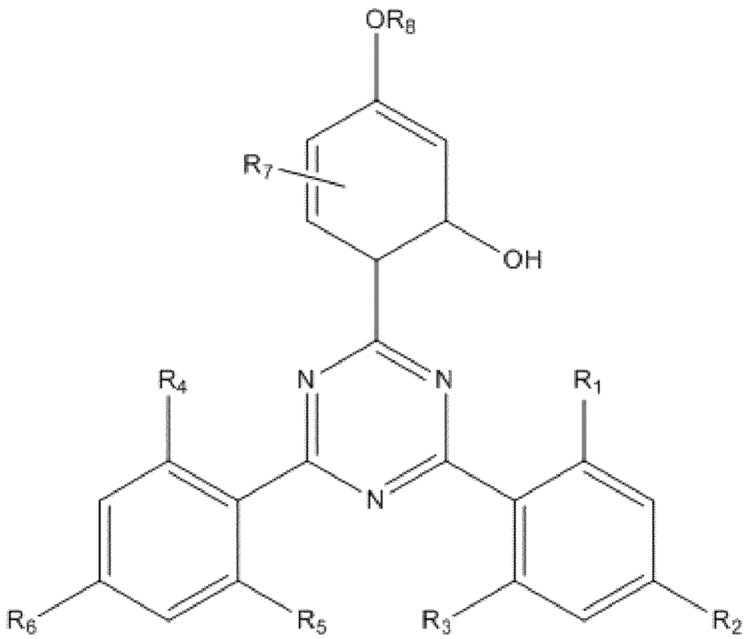

(II)

in which

$R_1$ to $R_6$ independently from one another, are H; or C1-C12 alkyl; ;
$R_7$ is H; and
$R_8$ is H; C1-C18 alkyl; or C1-C18 alkoxy which may substituted by - $COOR_7$ or OH.

The UV-absorber solution of the present invention can comprise one 2-hydroxy phenyl triazine compound of formula (II) or more than one, for example two or three distinct 2-hydroxy phenyl triazine compounds of formula (I).

According to another embodiment, the UV-absorber compound (UV) of the UV-stabilizer solution is a compound of formula (IIA):

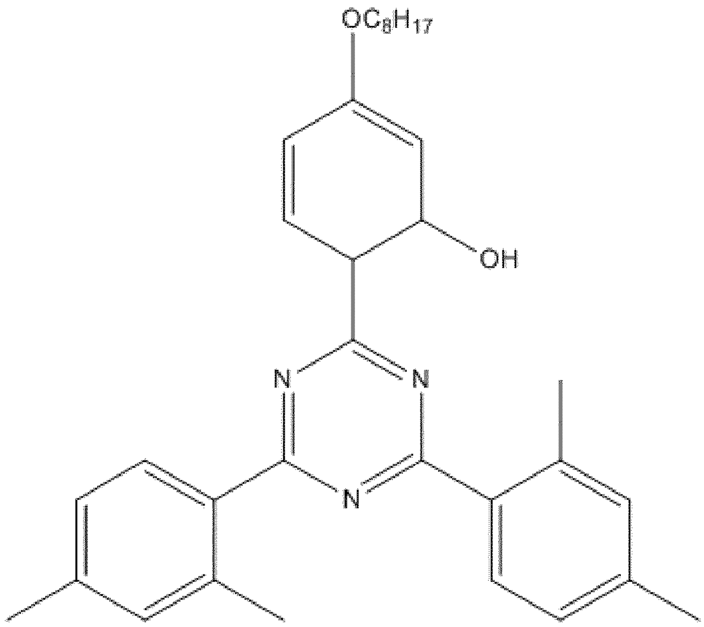

(IIA)

According to an embodiment, the phenyl triazine compound is a 2-hydroxyphenyl triazine compound of formula

(IIA) above. This compound is notably commercially available under the trade name Chiguard® 1064 from BASF.

Other phenyl triazine compounds are also commercially available under the trade names Tinuvin® 1577, Tinuvin® 400, Tinuvin® 460, Cyasorb® UV 1164 and Cyasorb® UV 1164L.

*The 2-hydroxy benzophenone compound*

According to an embodiment, the UV-absorber compound (UV) of the UV-stabilizer solution is 2-hydroxy benzophenone compound of formula (III):

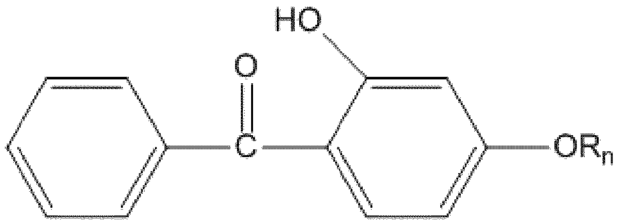

(III)

in which $R_n$ is H; or C1-C24 alkyl.

According to another embodiment, the UV-absorber compound (UV) of the UV-stabilizer solution is a compound of formula (IIIA), (IIIB) or (IIIB):

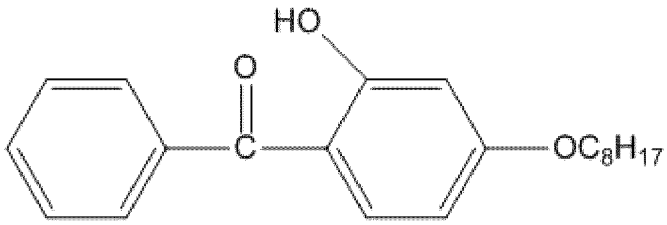

(IIIA)

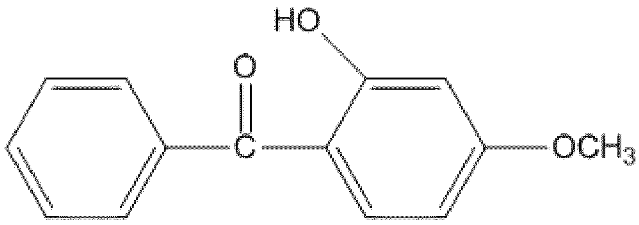

(IIIB)

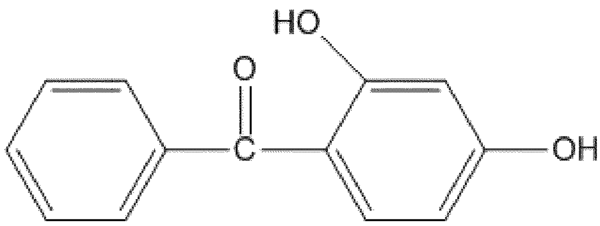

(IIIC)

These compounds are respectively commercially available under the trade name Lowlit® 22, 20 and 24 from Great Lakes.

The solvent

The present invention employs a UV-absorber compound - solvent combination which makes the treatment of

the surface layer of the polymer article possible and efficient with respect to UV-stabilization.

The solution penetrates the surface layer of the polymer, allowing for the sub-surface deposition of the UV stabilizer compounds (UV), and radical scavenger compounds (RS) (if also present in the solution).

The solvent useful in the practice of the present invention should be able to appropriately dissolve, at room temperature, the UV-absorbers compounds (UV), and radical scavenger compounds (RS) (if also present in the solution).

According to the present invention, the solution comprises at least one solvent selected from the group consisting of dimethylformamyde (DMF), N-Methyl-2-pyrrolidone (NMP), dimethylacetamide (DMAc) and tetrahydrofuran (THF). The solution may also comprise two, three or four distinct solvents from the list. The most preferred solvent is THF.

THF is the preferred solvent according to the present invention. The inventors have been able to show that THF is less dependent on the concentration than other solvents, for example dichloromethane ($CH_2Cl_2$).

The radical scavenger

The UV-stabilizer solution of the present invention may comprise one radical scavenger compound (RS), or more than one radical scavenger compounds (RS), for example two or three distinct radical scavenger compounds (RS).

According to the present invention, radical scavengers may be selected from the group consisting of hindered amine light stabilizers (HALS) and hindered phenol antioxidants (HPA).

HALS compounds which can be added to the UV-stabilizer solution of this invention include 2,2,6,6-tetraalkylpiperidine compounds of formula (IV), or polymers including the same:

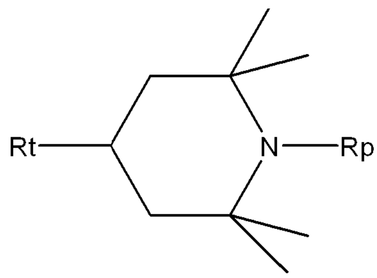

(IV)

wherein $R_t$ and $R_p$ are independently from one another, H or substituents.

According to an embodiment, the UV-stabilizer solution of this invention include 2,2,6,6-tetraalkylpiperidine compounds of formula (III), or polymers including the same, in which:

- $R_p$ is H or a C1-C18 alkyl and
- Rt is an alkyl, an aryl or a cycloalkyl, all possibly substituted with heteroatom(s) such as N, S or O.

According to one embodiment, at least one hindered amine light stabilizers (HALS) is comprised in the UV-stabilizer solution of the invention and this HALS is selected from the group consisting of compound of formula (IVA) and (IVB) below:

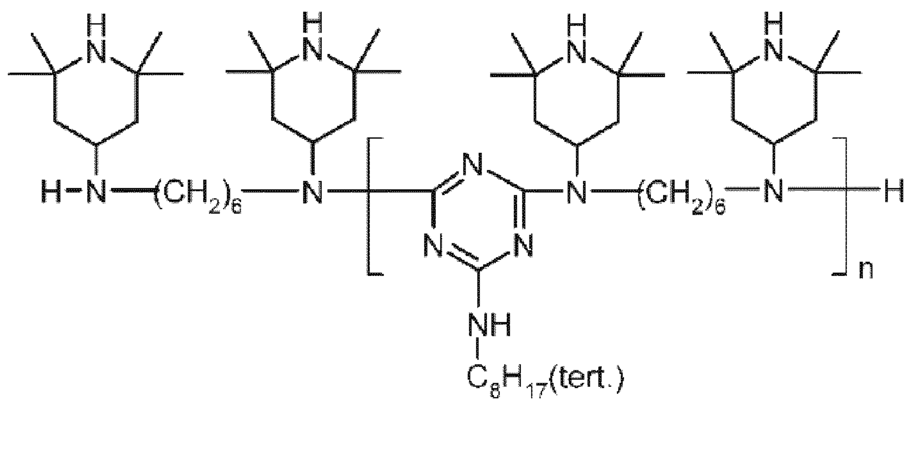

(IVA)

(with a molecular weight 2000-3300 g/mol)

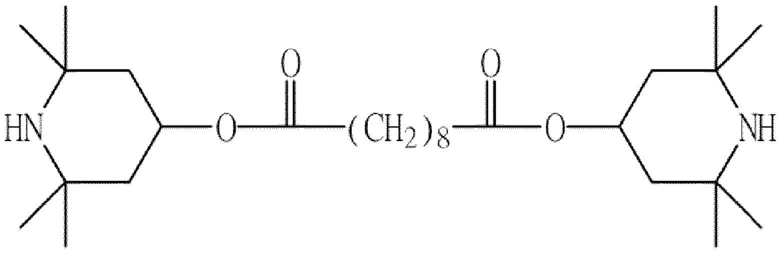

(IVB)

These compounds (IVA) and (IVB) are respectively available commercially, under the trade names Chiguard® 944 and Chiguard® 770 from BASF.

HPA compounds which can be added to the UV-stabilizer solution of this invention include 2,6-dialkylphenol derivative compounds of formula (V), or polymers including the same:

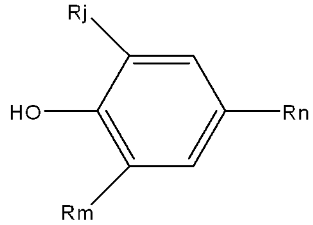

(V) wherein Rj, Rm and Rn represent independently from one another, further substituted or unsubstituted alkyl substituents.

According to an embodiment, the UV-stabilizer solution of this invention include 2,2,6,6-tetraalkylpiperidine compounds of formula (III), or polymers including the same, in which:

- $R_j$ and $R_m$ are independently from each other, a C1-C18 alkyl, and
- $R_n$ is an alkyl, an aryl or a cycloalkyl, all possibly substituted with heteroatom(s) such as N, S or O.

According to one embodiment, at least one hindered phenolic antioxidant (HPA) is comprised in the UV-stabilizer solution of the invention and this HALS is selected from the group consisting of compound of formula (VA) and (VB) below:

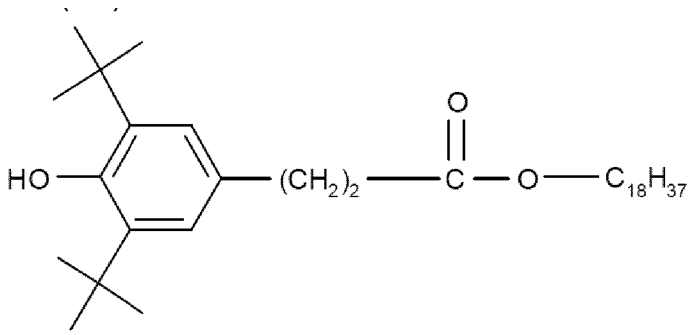

(VA)

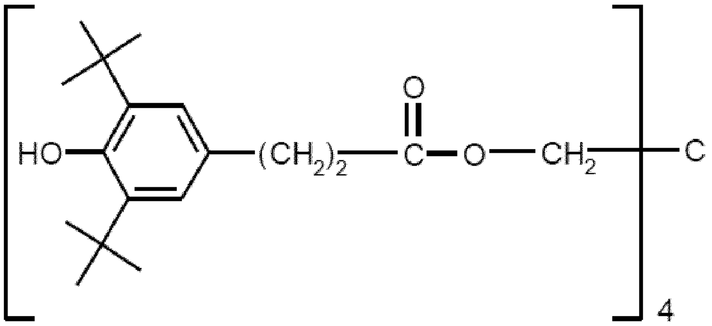

(VB)

These compounds are available commercially, under the trade names Irganox® 1076 and Irganox® 1010 from Ciba Specialty Chemicals.

The polymer article to be treated

The method according to the present invention is effective in treating polymer articles having a UV-susceptibility, such that their ΔE value is comprised between 5 and 50, after a 5-day exposure to filtered xenon arc light (using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C) according to ASTM G155-04.

According to the present invention, the UV-susceptibility of a polymer is determined by (i) exposing a desired polymer to accelerated weathering conditions, i.e. filtered xenon arc light, during 5 days and (ii) evaluating the color change(s) by standard methods known in the art.

Standardized methods for quantifying color changes are well known in the art. For example, color changes may be quantified according to the Hunterlab system which expresses color change based on the ΔE value, or according to the CIElab system which quantifies color changes based on the ΔE*.

According to the Hunterlab L-a-b system, the L coordinate represents the lightness (black to white) scale, the a coordinate represents the green-red chromaticity and the b coordinate represents the blue-yellow chromaticity. The Hunterlab system expresses ΔE according to the following equation:

$$\Delta E = \sqrt{(\Delta L)^2 + (\Delta a)^2 + (\Delta b)^2}$$

where

> *ΔL* refers to the change in darkness, that-is-to-say $\Delta L = L_{t5} - L_{t0}$, wherein $L_{t5}$ is the L value after a 5-day exposure to filtered xenon arc light and $L_{t0}$ is the initial L value of the molded polymer
> *Δa* refers to the change of color in the red-green axis, that-is-to-say $\Delta a = a_{t5} - a_{t0}$, wherein $a_{t5}$ is the a value after a 5-day exposure to filtered xenon arc light and $a_{t0}$ is the initial a value of the molded polymer
> *Δb* refers to the change of color in the blue-yellow axis, that-is-to-say $\Delta b = b_{t5} - b_{t0}$, wherein $b_{t5}$ is the a value after a 5-day exposure to filtered xenon arc light and $b_{t0}$ is the initial a value of the molded polymer.

The polymer of the present invention can be amorphous or semicrystalline.

According to an embodiment of the present invention, the polymer is selected from the group consisting of poly(aryl ether ketone) (PAEK), poly(aryl ether sulfone) (PAES) and polyarylene sulfide (PAS).

As used herein, a "poly(aryl ether ketone) (PAEK)" denotes any polymer comprising more than 50 mol. % of recurring units ($R_{PAEK}$) comprising a Ar'-C(=O)-Ar* group, where Ar' and Ar*, equal to or different from each other, are aromatic groups, the mol. % being based on the total number of moles in the polymer. The recurring units ($R_{PAEK}$) are selected from the group consisting of units of formulae (J-A) to (J-D) below :

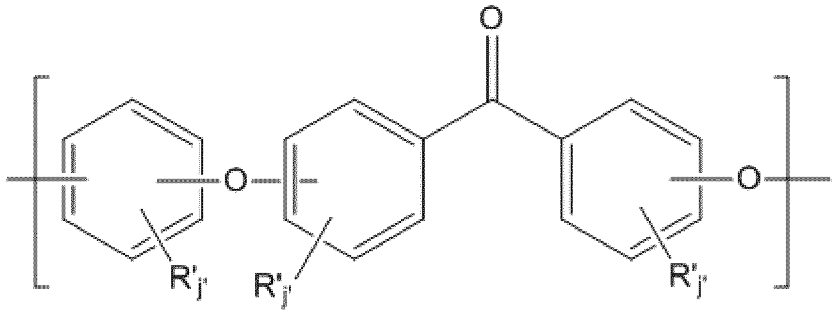

(J-A)

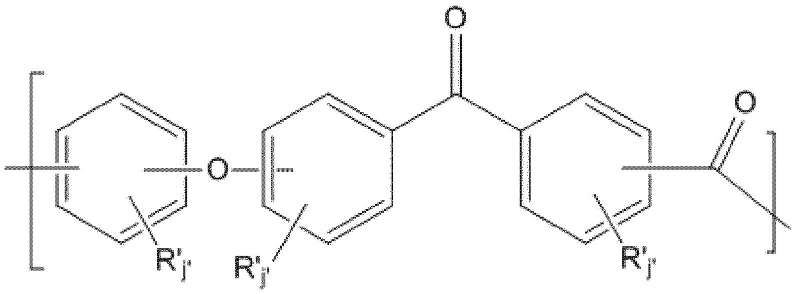

(J-B)

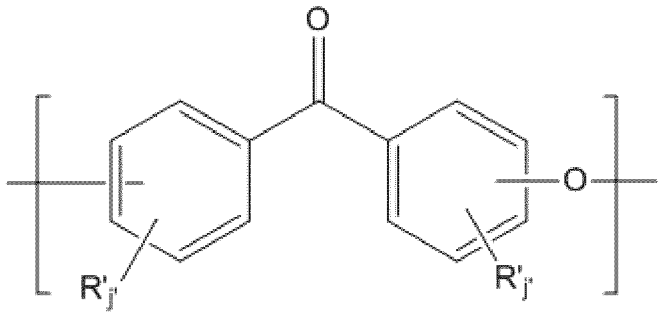

(J-C)

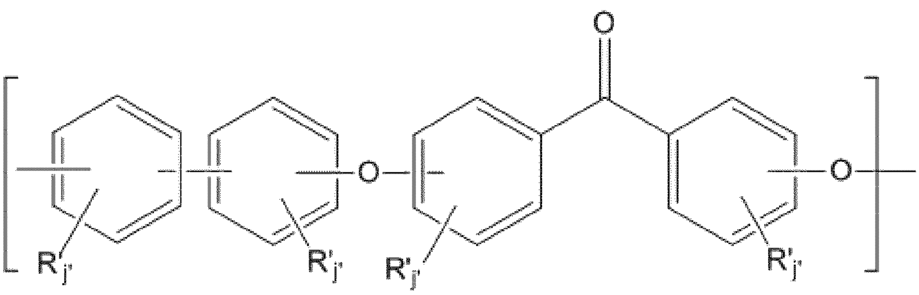

(J-D)

where :

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' is zero or an integer ranging from 1 to 4.

In recurring unit ($R_{PAEK}$), the respective phenylene moieties may independently have 1,2-, 1,4- or 1,3-linkages to the other moieties different from R' in the recurring unit ($R_{PAEK}$). Preferably, the phenylene moieties have 1,3- or 1,4-linkages, more preferably they have a 1,4-linkage.

In recurring units ($R_{PAEK}$), j' is preferably at each occurrence zero so that the phenylene moieties have no other substituents than those linking the main chain of the polymer.

In some embodiments, the PAEK is poly(ether ether ketone) (PEEK). As used herein, a "poly(ether ether ketone) (PEEK)" denotes any polymer of which more than 50 mol. % of the recurring units ($R_{PAEK}$) are recurring units of formula J'-A, the mol. % being based on the total number of moles in the polymer:

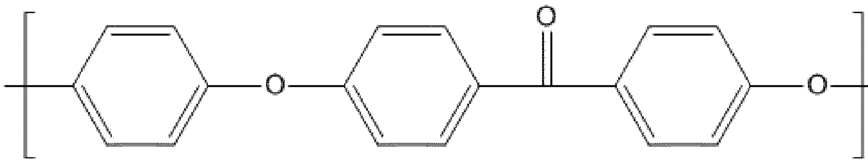
(J'-A)

Preferably at least 60 mol. %, 70 mol. %, 80 mol. %, 90 mol. %, 95 mol. %, 99 mol. %, and most preferably all of recurring units ($R_{PAEK}$) are recurring units (J'-A).

In another preferred embodiment, the PAEK is poly(ether ketone ketone) (PEKK). As used herein, a "poly(ether ketone ketone) (PEKK)" denotes any polymer of which more than 50 mol. % of the recurring units ($R_{PAEK}$) are a combination of recurring units of formula J'-B and formula J"-B, the mol. % being based on the total number of moles in the polymer:

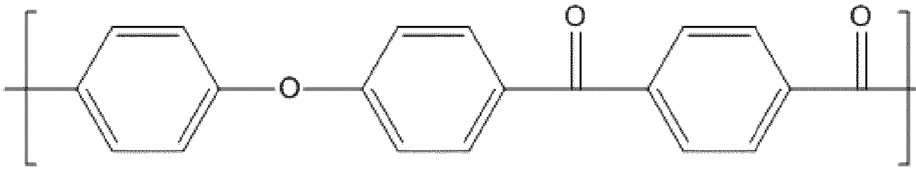
(J'-B)

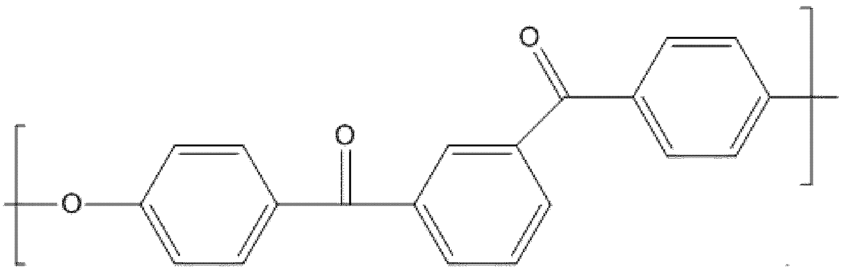
(J"-B)

Preferably at least 60 mol. %, 70 mol. %, 80 mol. %, 90 mol. %, 95 mol. %, 99 mol. %, and most preferably all of recurring units ($R_{PAEK}$) are a combination of recurring units (J'-B) and (J"-B).

In yet another preferred embodiment, the PAEK is poly(ether ketone) (PEK). As used herein, a "poly(ether ketone) (PEK)" denotes any polymer of which more than 50 mol. % of the recurring units ($R_{PAEK}$) are recurring units of formula (J'-C), the mol. % being based on the total number of moles in the polymer:

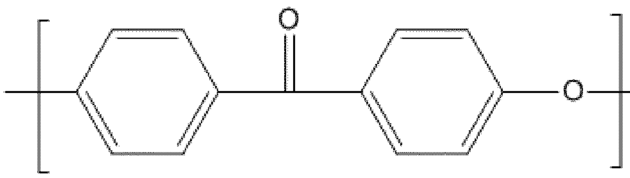
(J'-C)

Preferably at least 60 mol. %, 70 mol. %, 80 mol. %, 90 mol. %, 95 mol. %, 99 mol. %, and most preferably all of recurring units ($R_{PAEK}$) are recurring units (J'-C).

In some embodiments, the PAEK is a PEEK-PEDEK copolymer. As used herein, a "PEEK-PEDEK copolymer" denotes any polymer of which more than 50 mol. % of the recurring units ($R_{PAEK}$) are both recurring units of formula J'-A (PEEK) and formula J'-D (poly(diphenyl ether ketone)(PEDEK)), the mol. % being based on the total number of moles in the polymer:

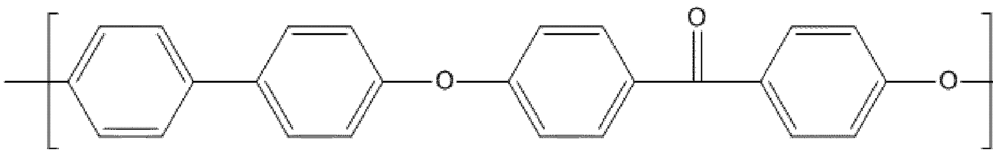

(J'-D)

.

The PEEK-PEDEK copolymer may include relative molar proportions of recurring units J'-A and J'-D (PEEK/PEDEK) ranging from 95/5 to 60/40. Preferably the sum of recurring units J'-A and J'-D represents at least 60 mol. %, 70 mol. %, 80 mol. %, 90 mol. %, 95 mol. %, 99 mol. %, of recurring units in the PAEK. In some aspects, recurring units J'-A and J'-D represent all of the recurring units in the PAEK.

Most preferably, the PAEK is PEEK or PEEK-PEDEK. KETASPIRE® PEEK is commercially available from Solvay Specialty Polymers USA, LLC.

For the purpose of the present invention, a "poly(aryl ether sulfone) (PAES)" denotes any polymer of which at least 50 mol. % of the recurring units are recurring units ($R_{PAES}$) of formula (K),the mol. % being based on the total number of moles in the polymer:

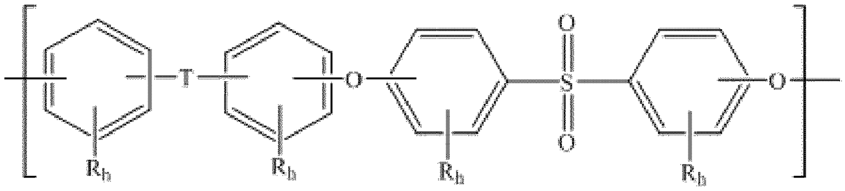

(K)

where

each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;

each h, equal to or different from each other, is an integer ranging from 0 to 4; and

T is selected from the group consisting of a bond, a sulfone group [$-S(=O)_2$], and a group $-C(R_j)(R_k)-$, where $R_j$ and $R_k$, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. $R_j$ and $R_k$ are preferably methyl groups.

Preferably at least 60 mol. %, 70 mol. %, 80 mol. %, 90 mol. %, 95 mol. %, 99 mol. %, and most preferably all of recurring units in the PAES are recurring units ($R_{PAES}$).

In one embodiment, the PAES is a polyphenylsulfone (PPSU). As used herein, a "polyphenylsulfone (PPSU)" denotes any polymer of which more than 50 mol. % of the recurring units are recurring units of formula (K'-A), the mol. % being based on the total number of moles in the polymer:

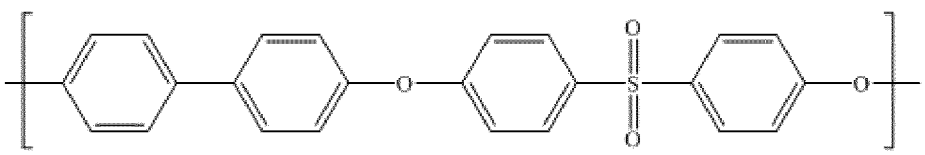

(K'-A)

Preferably at least 60 mol. %, 70 mol. %, 80 mol. %, 90 mol. %, 95 mol. %, 99 mol. %, and most preferably all of the recurring units in the PPSU are recurring units of formula (K'-A).

PPSU can be prepared by known methods and is notably available as RADEL® PPSU from Solvay Specialty Polymers USA, L.L.C.

In some embodiments, the PAES is a polyethersulfone (PES). As used herein, a "polyethersulfone (PES)" denotes any polymer of which at least 50 mol. % of the recurring units are recurring units of formula (K'-B), the mol. %

being based on the total number of moles in the polymer:

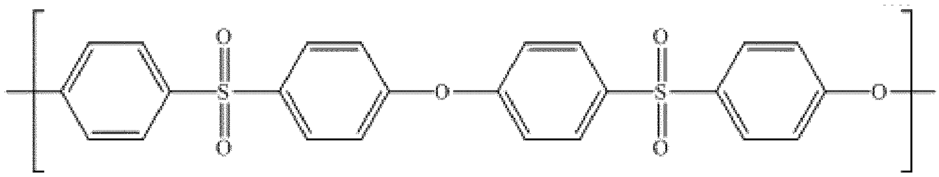

(K'-B)

Preferably at least 60 mol. %, 70 mol. %, 80 mol. %, 90 mol. %, 95 mol. %, 99 mol. %, and most preferably all of the recurring units in the PES are recurring units of formula (K'-B).

PES can be prepared by known methods and is notably available as VERADEL® PESU from Solvay Specialty Polymers USA, L.L.C.

In some embodiments, the PAES is a polysulfone (PSU). As used herein, a "polysulfone (PSU)" denotes any polymer of which at least 50 mol. % of the recurring units are recurring units of formula (K'-C), the mol. % being based on the total number of moles in the polymer:

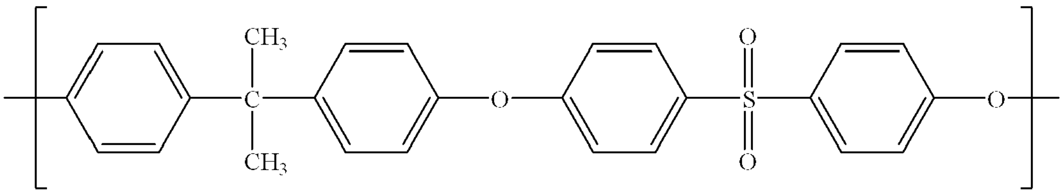

(K'-C).

Preferably at least 60 mol. %, 70 mol. %, 80 mol. %, 90 mol. %, 95 mol. %, 99 mol. %, and most preferably all of the recurring units in the PSU are recurring units of formula (K'-C).

PSU can be prepared by known methods and is available as UDEL® PSU from Solvay Specialty Polymers USA, L.L.C.

For the purpose of the present invention, the expression "polyarylene sulfide (PAS)" is intended to denote any polymer of which at least 50 mol. % of the recurring units are recurring units ($R_{PAS}$) of formula -(Ar'-S)-, where Ar' is an aromatic group.

Preferably at least 60 mol. %, 70 mol. %, 80 mol. %, 90 mol. %, 95 mol. %, 99 mol. %, and most preferably all of the recurring units in the PAS are recurring units ($R_{PAS}$).

Non-limiting examples of PAS include poly(2,4-toluene sulfide), poly(4,4'-biphenylene sulfide), poly(*para*-phenylene sulfide) (PPS), poly(*ortho*-phenylene sulfide), poly(*meta*-phenylene sulfide), poly(xylene sulfide), poly(ethylisopropylphenylene sulfide), poly(tetramethylphenylene sulfide), poly(butylcyclohexylphenylene sulfide), poly(hexyldodecylphenylene sulfide), poly(octadecylphenylene sulfide), poly(phenylphenylene sulfide), poly-(tolylphenylene sulfide), poly(benzylphenylene sulfide), poly[octyl-4-(3-methylcyclopentyl)phenylene sulfide], and any combination thereof.

Preferably, the PAS is poly(para-phenylene sulfide) (PPS). As used herein, a "poly(*para*-phenylene sulfide) (PPS)" denotes any polymer of which at least 50 mol. % of the recurring units are recurring units ($R_{PPS}$) of formula (L), the mol. % being based on the total number of moles in the polymer:

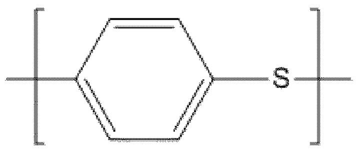

(L)

Preferably at least 60 mol. %, 70 mol. %, 80 mol. %, 90 mol. %, 95 mol. %, 99 mol. %, and most preferably all of the recurring units in the PPS are recurring units ($R_{PPS}$).

PPS is manufactured and sold under the trade name Ryton® PPS by Solvay Specialty Polymers USA, LLC.

According to an embodiment of the present invention, the polymer is selected from the group consisting of polyphenylsulfone (PPSU), polyethersulfone (PES), polysulfone (PSU), poly(ether ether ketone) (PEEK) and poly(*para*-phenylene sulfide) (PPS).

For example, the polymer article of the present invention can be made at least in part from a polymer composition (C) comprising a polymer (P) selected from the group consisting of polyphenylsulfone (PPSU), polyethersulfone (PES),

polysulfone (PSU), poly(ether ether ketone) (PEEK) and poly(*para*-phenylene sulfide) (PPS), optionally reinforcing agents.

The composition (C) can for example comprises up to 60 wt. % of reinforcing agents, the % being based on the total weight of the composition (C). The optional reinforcing agents, also called reinforcing fibers or fillers, may be selected from fibrous and particulate reinforcing agents. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50. The reinforcing filler may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite. The reinforcing agents may be present in the composition (C) in a total amount of greater than 0.5 wt. %, greater than 1 wt. % by weight, greater than 1.5 wt. % or greater than 2 wt. %, based on the total weight of the polymer composition (C). The reinforcing agents may be present in the composition (C) in a total amount of less than 50 wt. %, less than 40 wt. %, less than 30 wt. %, less less than 20 wt. % or less than 10 wt. %, based on the total weight of the polymer composition (C).

The polymer composition (C) may also comprises optional components, for example selected from the group consisting of plasticizers, colorants, pigments (e.g. black pigments such as carbon black and nigrosine), antistatic agents, dyes, lubricants (e.g. linear low density polyethylene, calcium or magnesium stearate or sodium montanate), thermal stabilizers, light stabilizers, flame retardants, nucleating agents and antioxidants.

The composition (C) may comprise one or more distinct polymers, as long as the polymer article incorporating the same has a UV-susceptibility, such that their ΔE value is comprised between 5 and 50, after a 5-day exposure to filtered xenon arc light (using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C), according to ASTM G155-04.

<u>The UV-stabilized polymer article</u>

The present invention also relates to a process for preparing a UV-stabilized polymer article which comprises a step consisting in contacting the surface layer of a polymer article with the UV stabilizer solution.

The present invention also provides UV-stabilized polymer articles, obtainable by the process of the present invention, that-is-to-say polymer articles which are resistant to color change upon exposure to UV light. UV-stabilized polymer articles are also called treated polymer articles, in comparison with polymer articles which have not be contacted with the UV-stabilizer solution of the invention and serve as a reference to assess the efficiency of the process of the present invention to impart resistance to color change to the polymer articles at stake.

In the exemplified polymer compositions, color changes were determined according to the Hunterlab system. However, the particular manner that color change is expressed is not essential to the invention. All that is essential is that the color change be offset as a result of the treatment of the polymer article with the UV-absorber solution. Thus, if the Hunterlab or CIElab system is used to express color change, it is desirable that the ΔE or ΔE* value be as low as possible, ideally zero.

According to the Hunterlab L-a-b system, the L coordinate represents the lightness (black to white) scale, the a coordinate represents the green-red chromaticity and the b coordinate represents the blue-yellow chromaticity. The Hunterlab system expresses ΔE according to the following equation:

$$\Delta E = \sqrt{(\Delta L)^2 + (\Delta a)^2 + (\Delta b)^2}$$

where

> *ΔL* refers to the change in darkness, that-is-to-say *ΔL* = $L_{t5}$ - Lie, wherein $L_{t5}$ is the L value after a 5-day exposure to filtered xenon arc light and $L_{t0}$ is the initial L value of the molded polymer
> *Δa* refers to the change of color in the red-green axis, that-is-to-say *Δa* = $a_{t5}$ - $a_{t0}$, wherein $a_{t5}$ is the a value after a 5-day exposure to filtered xenon arc light and $a_{t0}$ is the initial a value of the molded polymer
> *Δb* refers to the change of color in the blue-yellow axis, that-is-to-say *Δb* = $b_{t5}$ - $b_{t0}$, wherein $b_{t5}$ is the a value after a 5-day exposure to filtered xenon arc light and $b_{t0}$ is the initial a value of the molded polymer.

The ΔE of the treated articles should be as low as possible. When the ΔE of the treated article is reduced by at least 50 %, in comparison to the ΔE of non-treated articles, after a 5-day exposure to filtered xenon arc light using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C, in accordance with ASTM G155-04, it is considered according to the present invention that the polymer article is UV-stabilized. Then, according to the present invention, the polymer article is said to be UV-stabilized following the process of the present invention, when its ΔE (or ΔE*) is reduced by at least 50 % in comparison to ΔE (or ΔE*) of the non-treated polymer article, after a 5-day exposure to filtered xenon arc light, using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C, in accordance with ASTM G155-04. According to an embodiment, the ΔE of the treated article is reduced by at least 60 %, in comparison to the ΔE of non-treated articles, after a 5-day exposure to filtered xenon arc light using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C, in accordance with ASTM G155-04 by at least 70 % or by at least 80 %.

According to an embodiment of the present invention, the treated polymer article incorporate UV-stabilizer compounds (UV) in the surface layer of the polymer article, as detected by photoacoustic FTIR analysis of the surface.

The surface layer of the article is the depth of polymer material extending from the surface of the article wherein UV-stabilizer compounds (UV), optionally radical scavengers compounds (RS), can be detected after treatment. The polymer article may have several layers. The process of the present invention may be applied to one surface layer only or several, depending on the expected effect and/or the process used to treat the articles (e.g. coating, spraying, bath immersion). According to an embodiment of the invention, the surface layer extends to a depth of 20 μm from the surface of the article, a depth of 50 μm or a depth of 100 μm. The concentration of active compounds may vary within the surface layer, for example being maximum adjacent to the surface and decreases progressively to zero within the depth of the surface layer, that-is-to-say within 20 μm from the surface of the article, a depth of 50 μm, a depth of 100 μm from the surface of the article.

The present invention also relates to the use of the UV-absorber solution as defined above to treat the surface layer of polymer article having a UV-susceptibility, such that its ΔE value is comprised between 5 and 50, after a 5-day exposure to filtered xenon arc light, using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C in accordance with ASTM G155-04.

According to an embodiment, the UV-absorber solution as defined above is used to treat the surface layer of polymer article having a UV-susceptibility, such that its ΔE value is comprised between 5 and 40, or between 5 and 30, after a 5-day exposure to filtered xenon arc light, using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C, in accordance with ASTM G155-04.

EXAMPLES

**Raw Materials**:

Polymer-1: Radel® R-5100 NT is a poly(biphenyl ether sulfone) (PPSU) from Solvay Specialty Polymers USA, L.L.C.
Polymer-2: Udel® P-1700 is a polysulfone (PSU) from Solvay Specialty Polymers USA, L.L.C.
Polymer-3: KetaSpire® KT 880 is a poly(ether ether ketone) (PEEK) from Solvay Specialty Polymers USA, L.L.C.
Polymer-4: Ryton® PPS is a poly(*para*-phenylene sulphide) from Solvay Specialty Polymers USA, L.L.C.
$TiO_2$: Ti-Pure® R-105 is a maximum-durability grade of $TiO_2$ from DuPont®.
UV-1: Tinuvin® 234 is a 2-hydroxyphenyl benzotriazole UV-absorber of formula (IA), as above detailed, from BASF.
UV-2: Tinuvin® P is a 2-hydroxyphenyl benzotriazole UV-absorber of formula (IC), as above detailed, from BASF.
UV-3: Chiguard® 1064 is a hydroxyphenyl triazine UV-absorber of formula (IIA), as above detailed, from BASF.
RS-1: Chiguard® 944 is a hindered amine radical scavenger of formula (IIIa), as above detailed, from BASF.
RS-2: Chiguard® 770 is a hindered amine radical scavenger of formula (IIIb), as above detailed, from BASF.
Solvent-1: THF
Solvent-2: Acetone
Solvent-3: $CH_2Cl_2$

**General procedure for the preparation of the molded articles**

Molded articles (M1-M9) were prepared by injection molding of melt compounded blends comprised of one or two polymers and, optionally $TiO_2$ as defined in Table 1. Melt blending was carried out using a Coperion ZSK26 extruder under typical compounding conditions for each resin type. Following compounding, the polymer blends were injection molded to produce specimens of dimension75 mm x50 mm x 2.4 mm that were used in the experiments described herein.

**Table 1**

| Molded Article | Polymer | Wt. % Polymer | Wt. % $TiO_2$ |
|---|---|---|---|
| M1 | Radel® 5100 PPSU | 100 | - |
| M2 | Radel® 5100 PPSU | 95 | 5 |
| M3 | Radel® 5100 PPSU/ KetaSpire® KT 880 PEEK 80/20 | 75 | 25 |
| M4 | Udel® P 3703NT PSU | 100 | - |
| M5 | Udel® P 3703NT PSU | 95 | 5 |
| M6 | KetaSpire® KT 880 PEEK | 100 | - |
| M7 | KetaSpire® KT 880 PEEK | 95 | 5 |
| M8 | Ryton® PPS | 95 | 5 |
| M9 | Polycarbonate | 100 | - |

**General procedure for the preparation of the UV-stabilizer solution** UV-stabilizer solutions were prepared by dissolving a quantity of UV absorber (UV) and, optionally a quantity of radical scavenger (RS) into a defined quantity of solvent.

**General procedure for the treatment of the molded article**

To impart UV stability, the molded articles were submerged into a glass jar containing a UV-stabilizer solution for a dip time ranging from 30 seconds to 2 hours. Following submersion, the molded article was removed and then allow to dry at ambient temperature and pressure in air for at least 16 h.

**UV exposure method and colorometry measurement**

UV exposure was carried out using an Atlas ci4000 Xenon Weather-Ometer® configured with a Type S Borosilicate inner filter, a Type S Borosilicate outer filter, a irradiance at 340 nm setting of 0.3 W/$m^2$ set, a relative humidity setting of 54 %, and a temperature of 38°C, according to ASTM G155-04. In a typical experiment, treated and untreated specimens were mounted to a sample holder, placed in the weathering chamber, and exposed to radiation for 5 days. At the end of each exposure period, colorimetery measurement was performed on each sample.

Colorimetry measurements were carried out using an X-Rite® Ci7800 spectrophotometer. The instrument was calibrated with a white tile and black trap prior to usage.

Color changes were determined according to the Hunterlab system. According to the Hunterlab L-a-b system, the L coordinate represents the lightness (black to white) scale, the a coordinate represents the green-red chromaticity and the b coordinate represents the blue-yellow chromaticity. The Hunterlab system expresses ΔE according to the following equation:

$$\Delta E = \sqrt{(\Delta L)^2 + (\Delta a)^2 + (\Delta b)^2}$$

where

$\Delta L$ refers to the change in darkness, that-is-to-say $\Delta L = L_{t5}$ - Lie, wherein $L_{t5}$ is the L value after a 5-day exposure filtered xenon arc light and $L_{t0}$ is the initial L value of the molded polymer

Δa refers to the change of color in the red-green axis, that-is-to-say $\Delta a = a_{t5} - a_{t0}$, wherein $a_{t5}$ is the a value after a 5-day exposure filtered xenon arc light and $a_{t0}$ is the initial a value of the molded polymer

$\Delta b$ refers to the change of color in the blue-yellow axis, that-is-to-say $\Delta b = b_{t5} - b_{t0}$, wherein $b_{t5}$ is the a value after a 5-day exposure filtered xenon arc light and $b_{t0}$ is the initial a value of the molded polymer.

**<u>Example 1:</u> UV susceptibility of untreated molded articles**

The UV susceptibility of several polymer articles was assessed in this example.

**Table 2**

| Molded Article | Polymer | UV susceptibility ΔE |
|---|---|---|
| M1 | Radel® 5100 PPSU | 11.74 |
| M2 | Radel® 5100 PPSU 95 TiO2 5 | 25.15 |
| M3 | Radel® 5100 PPSU/ KetaSpire® KT 880 PEEK 80/20 | 15.03 |
| M4 | Udel® P 3703NT PSU | 21.37 |
| M5 | Udel® P 3703NT PSU 95 TiO2 5 | 12.22 |
| M6 | KetaSpire® KT 880 PEEK | 18.97 |
| M7 | KetaSpire® KT 880 PEEK | 19.04 |
| M8 | Ryton® PPS TiO2 | 33.6 |
| M9 | Polycarbonate | 1.56 |

Polymer composition (C) comprising a polymer (P) selected from the group consisting of polyphenylsulfone (PPSU), polyethersulfone (PES), polysulfone (PSU), poly(ether ether ketone) (PEEK) and poly(paraphenylene sulfide) (PPS), optionally reinforcing agents have a ΔE value is comprised between 5 and 50, after a 5-day exposure to filtered xenon arc light, using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C, in accordance with ASTM G155-04, and qualify as UV-susceptible polymer articles according to the present invention.

Polycarbonate articles (M9) are not UV-susceptible polymer articles according to the present invention.

## Example 2

Several UV-stabilizer solutions were tested on M2 molded articles (30 sec treatment). The UV-stabilizer solutions and ΔE measurements are detailed in Table 3-6 below.

Ex 1 C corresponds to the untreated article M2.

**Table 3**

| **Examples** | | Ex 1 C | Ex 2 C | Ex 3 | Ex 4 |
|---|---|---|---|---|---|
| **UV-stabilizer solutions** | **UV** | 0 | none | UV-1 | UV-2 |
| | Mol. % | 0 | 0 | 2.5 | 2.5 |
| | **RS** | 0 | RS-1 | none | none |
| | Mol. % | 0 | 2.5 | 0 | 0 |
| | **Solvent** | 0 | THF | THF | THF |
| **ΔE measureme nts** | **ΔE at day 5** | 25.4 | 24.07 | 1.78 | 2.08 |
| | **% reduction ΔE at day 5** | na | 5.2 % | 93 % | 91.8 % |

**Table 4**

| **Examples** | | Ex 5 | Ex 6 C | Ex 7 | Ex 8 |
|---|---|---|---|---|---|
| **UV-stabilizer solutions** | **UV** | UV-1 | UV-1 | UV-2 | UV-2 |
| | Mol. % | 2.5 | 2.5 | 2.5 | 2.5 |
| | **RS** | RS-1 | RS-1 | RS-1 | RS-2 |
| | Mol. % | 2.5 | 2.5 | 2.5 | 2.5 |
| | **Solvent** | THF | CH2Cl2 | THF | THF |

(continued)

| Examples | | Ex 5 | Ex 6 C | Ex 7 | Ex 8 |
|---|---|---|---|---|---|
| ΔE measureme nts | ΔE at day 5 | 1.51 | 1.91 | 3.25 | 2.47 |
| | % reduction ΔE at day 5 | 94.1 % | 92.8 % | 84.2 % | 90.3 % |

**Table 5**

| Examples | | Ex 9 | Ex 10 | Ex 11 | Ex 12 C |
|---|---|---|---|---|---|
| UV-stabilizer | UV | UV-3 | UV-2 | UV-1 | UV-1 |
| | Mol. % | 2.5 | 2.5 | 2.5 | 2.5 |
| solutions | RS | RS-1 | RS-3 | RS-2 | RS-2 |
| | Mol. % | 2.5 | 2.5 | 2.5 | 2.5 |
| | Solvent | THF | THF | THF | CH2Cl2 |
| ΔE measureme nts | ΔE at day 5 | 2.58 | 3.65 | 3.66 | 1.88 |
| | % reduction ΔE at day 5 | 89.8 % | 85.6 % | 85.6 % | 92.6 % |

As shown in Tables 3-5 above, treating the M2 molded articles with the UV-stabilizer solutions of Examples 3 to 12 led to a substantial ΔE reduction (%) in comparison to the non-treated M2 molded article (Ex 1 C) or the M2 molded article treated with a solution comprising no UV-absorber compound according to the present invention (Ex 2 C).

**Table 6**

| Examples | | Ex 13 C | Ex 14 C | Ex 15 C | Ex 16 C |
|---|---|---|---|---|---|
| UV-stabilizer solutions | UV | UV-1 | UV-1 | UV-1 | UV-1 |
| | Mol. % | 2.5 | 0.50 | 0.25 | 2.5 |
| | RS | RS-1 | RS-1 | RS-1 | RS-2 |
| | Mol. % | 2.5 | 2.5 | 2.5 | 2.5 |
| | Solvent | Acetone | THF | THF | Acetone |
| ΔE measureme nts | ΔE at day 5 | 16.1 | 14.99 | 18.61 | 25.34 |
| | % reduction ΔE at day 5 | 36.6 % | 41.0 % | 26.8 % | 0.2 % |

As shown in Table 6, using acetone as a solvent in the UV-stabilizer solution instead of THF or $CH_2Cl_2$ (Ex 13 C and 16 C) or reducing the quantity of UV-absorber compound (Ex 14 C and 15 C) did not lead to a substantial ΔE reduction (%) in comparison to the non-treated M1 molded article (Ex 1 C) with a % of ΔE reduction lower than 50 % (i.e. threshold according to which the polymer article is considered UV-stabilized according to the present invention).

## Example 3

Several UV-stabilizer solutions were tested on M3 molded articles (30 sec treatment). The UV-stabilizer solutions and ΔE measurements are detailed in Tables 7-8 below.

Ex 17 C corresponds to the untreated article M3.

Table 7

| Examples | | Ex 17 C | Ex 18 | Ex 19 | Ex 20 C |
|---|---|---|---|---|---|
| UV-stabilizer solutions | UV | 0 | UV-1 | UV-1 | UV-1 |
| | Mol. % | 0 | 2.5 | 2.5 | 2.5 |
| | RS | 0 | RS-1 | none | RS-1 |
| | Mol. % | 0 | 2.5 | 0 | 2.5 |
| | Solvent | 0 | THF | THF | acetone |
| ΔE measureme nts | ΔE at day 5 | 15.03 | 0.74 | 2.6 | 15.24 |
| | % improvement ΔE at day 5 | na | 95 % | 82 % | -1.4 % |

Table 8

| Examples | | Ex 21 | Ex 22 | Ex 23 C | Ex 24 C |
|---|---|---|---|---|---|
| UV-stabilizer solutions | UV | UV-2 | UV-3 | UV-1 | none |
| | Mol. % | 2.5 | 2.5 | 2.5 | 0 |
| | RS | RS-1 | RS-1 | RS-1 | RS-1 |
| | Mol. % | 2.5 | 2.5 | 2.5 | 2.5 |
| | Solvent | THF | THF | $CH_2Cl_2$ | THF |
| ΔE measureme nts | ΔE at day 5 | 3.26 | 3.46 | 1.47 | 15.33 |
| | % improvement ΔE at day 5 | 78.3 % | 77.0 % | 90.2 % | - 2.0 % |

## Example 4

The UV-stabilizer solutions were tested on several molded articles, unfilled or filled, as described in Table 9 (treatment time: 30 sec) and Table 10 (treatment time: 1 hour) below.

Table 9

| Examples | | Ex 25 | Ex 26 | Ex 27 | Ex 28 |
|---|---|---|---|---|---|
| Molded articles | | M1 | M2 | M4 | M5 |
| UV-stabilizer solutions | UV | UV-2 | UV-1 | UV-1 | UV-2 |
| | Mol. % | 2.5 | 2.5 | 2.5 | 2.5 |
| | RS | RS-1 | RS-1 | RS-1 | RS-1 |
| | Mol. % | 2.5 | 2.5 | 2.5 | 2.5 |
| | Solvent | THF | THF | THF | THF |
| ΔE measureme nts | Untreated article ΔE at day 5 | 11.74 | 25.15 | 21.37 | 12.22 |
| | Treated article ΔE at day 5 | 4.27 | 0.93 | 0.32 | 2.19 |
| | % reduction ΔE at day 5 | 63.6 | 96.3 | 98.5 | 82.1 |

**Table 10**

| Examples | | Ex 29 | Ex 30 | Ex 31 |
|---|---|---|---|---|
| **Molded articles** | | M6 | M7 | M8 |
| **UV-stabilizer solutions** | **UV** | UV-1 | UV-1 | UV-1 |
| | Mol. % | 2.5 | 2.5 | 2.5 |
| | **RS** | RS-1 | RS-1 | RS-1 |
| | Mol. % | 2.5 | 2.5 | 2.5 |
| | **Solvent** | THF | THF | THF |
| **ΔE measureme nts** | **Untreated article ΔE at day 5** | 19.4 | 33.98 | 19.13 |
| | **Treated article ΔE at day 5** | 4.0 | 14.46 | 8.09 |
| | **% reduction ΔE at day 5** | 79.4 % | 57.4 % | 57.7 % |

As shown in Tables 9-10 above, molded articles made from different polymer compositions can be efFectively surface treated with the UV-stabilizer solutions of the invention. All of the examples led to a substantial ΔE reduction (%) in comparison to their respective untreated molded article, with a % of ΔE reduction greater than 50 % (i.e. threshold according to which the polymer article is considered UV-stabilized according to the present invention).

## Claims

**1.** Method for treating at least one surface of a polymer article, comprising:

- providing a UV-stabilizer solution comprising:

a) from 1.5 to 15 mol. % of at least one UV-absorber compound (UV) selected from the group consisting of:

a1) a 2-hydroxyphenyl benzotriazole compound of formula (I):

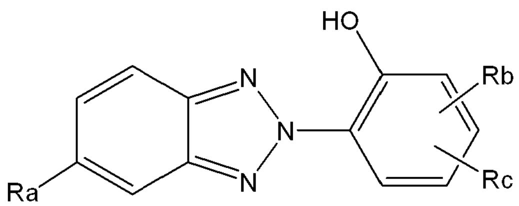

(I)

in which

$R_a$ is H; Cl; C1-C4 alkyl; C1-C4 alkoxy; or -$COOR_d$; and
$R_b$, $R_c$ and $R_d$, independently from one another, are H; C1-C24 alkyl; C7-C16 alkylphenyl; or C5-C12 cycloalkyl; and

a2) a 2-hydroxy phenyl triazine compound of formula (II):

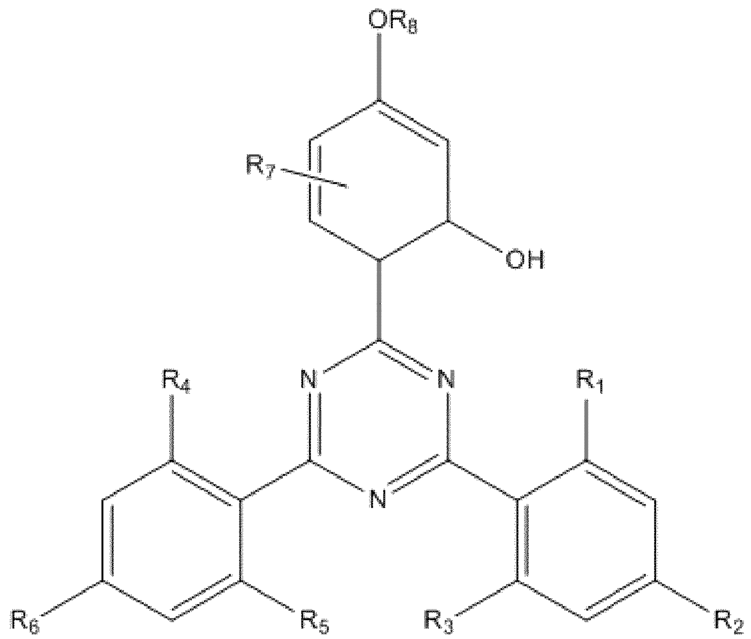

(II)

in which

$R_1$ to $R_6$ independently from one another, are H; OH; C1-C12 alkyl; C2-C6 alkenyl; C1-C12 alkoxy; C2-C18 alkenoxy; halogen; trifluoromethyl; C7-C11phenylalkyl; phenyl; phenyl which is substituted by C1-C18 alkyl, C1-C18 alkoxy or halogen; phenoxy; phenoxy which is substituted by C1-C18 alkyl, C1-C18 alkoxy or halogen; C1-C18 alkoxy; C1-C18 alkoxy which is substituted by -$COOR_7$ or OH;
$R_7$ is H; C1-C24 alkyl; C7-C16 alkylphenyl; or C5-C12 cycloalkyl; and
$R_8$ is H; C1-C18 alkyl; or C1-C18 alkoxy which may substituted by - $COOR_7$ or OH; and

a3) a 2-hydroxy benzophenone of formula (III):

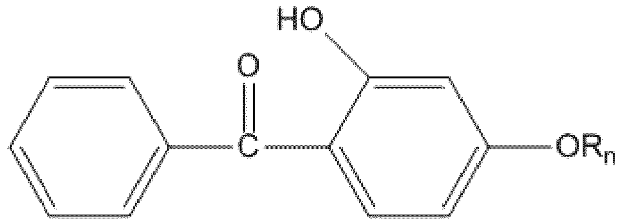

(III)

in which $R_n$ is H; or C1-C24 alkyl;

b) at least one solvent selected from the group consisting of dimethylformamyde (DMF), N-Methyl-2-pyrrolidone (NMP), dimethylacetamide (DMAc) and tetrahydrofuran (THF),
c) optionally a radical scavenger compound (RS),

- providing a polymer article having a UV-susceptibility, such that its ΔE value is comprised between 5 and 50, after a 5-day exposure to filtered xenon arc light, (using an Atlas ci4000 Xenon Weather-Ometer® configured with a Type S Borosilicate inner filter, a Type S Borosilicate outer filter, a irradiance at 340 nm setting of 0.3 $W/m^2$ set, a relative humidity setting of 54 %, and a temperature of 38°C) in accordance with ASTM G155-04,

wherein the ΔE (Hunterlab system) is according to the following equation:

$$\Delta E = \sqrt{(\Delta L)^2 + (\Delta a)^2 + (\Delta b)^2}$$

wherein

$\Delta L$ refers to the change in darkness, that-is-to-say $\Delta L = L_{t5} - L_{t0}$, wherein $L_{t5}$ is the L value after a 5-day exposure to filtered xenon arc light and $L_{t0}$ is the initial L value of the molded polymer

$\Delta a$ refers to the change of color in the red-green axis, that-is-to-say $\Delta a = a_{t5} - a_{t0}$, wherein $a_{t5}$ is the a value after a 5-day exposure to filtered xenon arc light and $a_{t0}$ is the initial a value of the molded polymer

$\Delta b$ refers to the change of color in the blue-yellow axis, that-is-to-say $\Delta b = b_{t5} - b_{t0}$, wherein $b_{t5}$ is the a value after a 5-day exposure to filtered xenon arc light and $b_{t0}$ is the initial a value of the molded polymer,

- contacting the surface layer of the polymer article with the UV-stabilizer solution.

**2.** The method of claim 1, wherein the UV-absorber compound is selected from group of compounds of formula (IA), (IB), (IC) or (IIA) below:

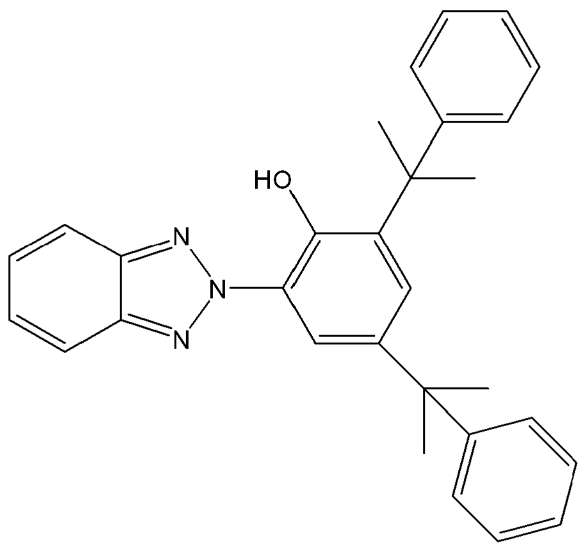

(IA)

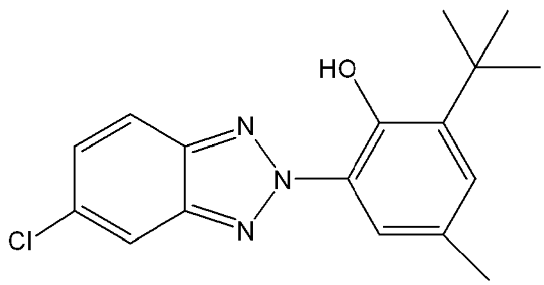

(IB)

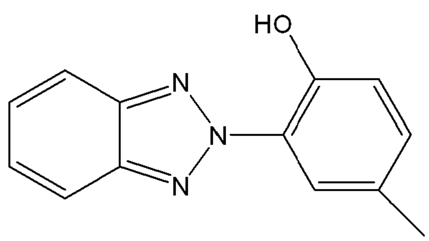

(IC)

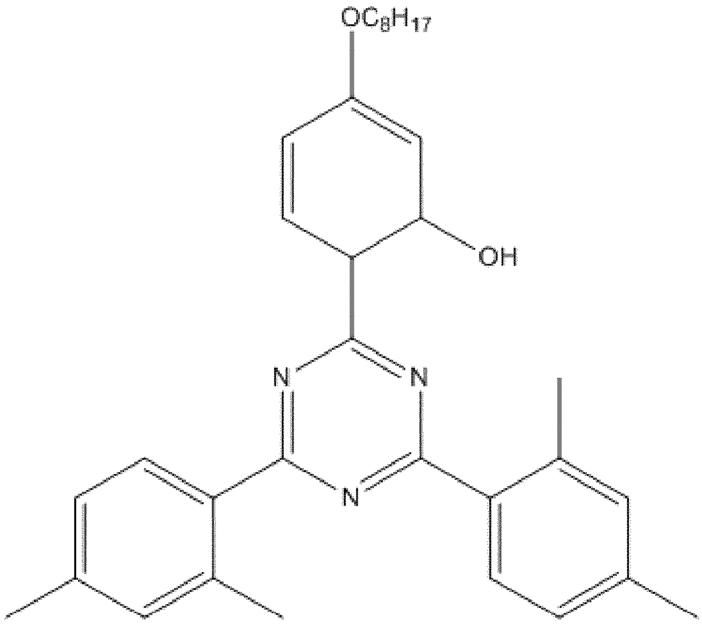

(IIA)

3. The method of claim 1 or 2, wherein the polymer article is made at least in part from a polymer composition (C) comprising a polymer selected from the group consisting of poly(aryl ether ketone) (PAEK), poly(aryl ether sulfone) (PAES) and polyarylene sulfide (PAS).

4. The method of any one of claims 1-3, wherein the UV-stabilizer solution comprises from 0.01 mol. % to 15 mol. % of radical scavenger compounds (RS), based on the total number of moles of the solution.

5. The method of any one of claims 1-4, wherein the radical scavenger compound (RS) is selected from the group consisting of hindered amine light stabilizers (HALS) and hindered phenol antioxidants (HPA).

6. The method of any one of claims 1-4, wherein the radical scavenger compound (RS) is selected from the group consisting of compounds of formula (IIIA), (IIIB), (IVA) and (IVB) below:

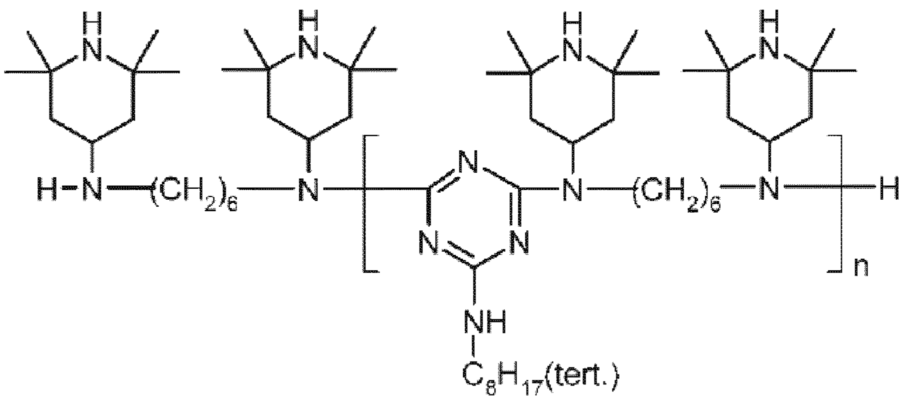

(IVA) (with a molecular weight 2000-3300 g/mol)

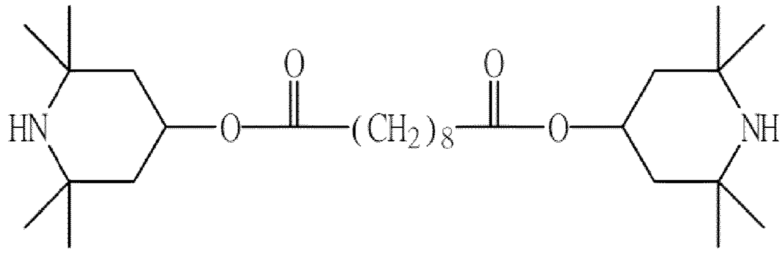

(IVB)

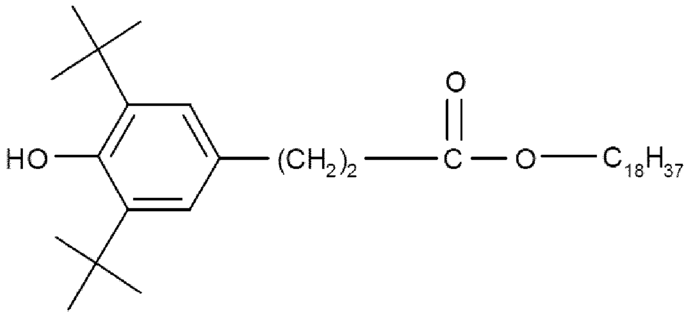

(VA)

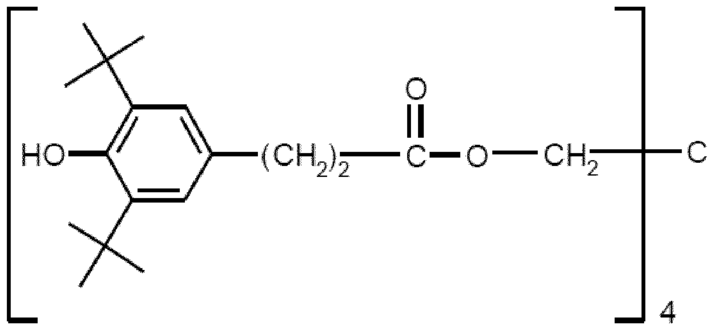

(VB)

7. The method of any one of claims 1-5, wherein the step of contacting is implemented by way of coating the surface of the article, spraying onto the surface of the article or immersing the article in a bath.

8. The method of any one of claims 1-6, wherein the step of contacting occurs between 10 and 30°C.

9. Treated polymer article obtainable by the process of any one of claims 1-7.

10. Treated polymer article of claim 9, incorporating UV-stabilizer compounds (UV) in the surface layer of the polymer article, as determined by photoacoustic FTIR measurements.

11. Treated polymer article of claim 10, wherein the surface layer extends to a depth of 50 μm from the surface of the article.

12. Use of UV-stabilizer solution comprising:

a) from 0.1 to 15 mol. % of at least one UV-absorber compound (UV) selected from the group consisting of:

a1) a 2-hydroxyphenyl benzotriazole compound of formula (I):

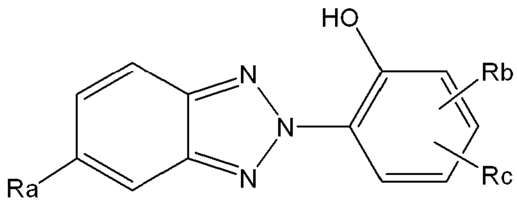

(I)

in which

$R_a$ is H; Cl; C1-C4 alkyl; C1-C4 alkoxy; or -COOR$_d$; and
$R_b$, $R_c$ and $R_d$, independently from one another, are H; C1-C24 alkyl; C7-C16 alkylphenyl; or C5-C12 cycloalkyl;

a2) a 2-hydroxy phenyl triazine compound of formula (II):

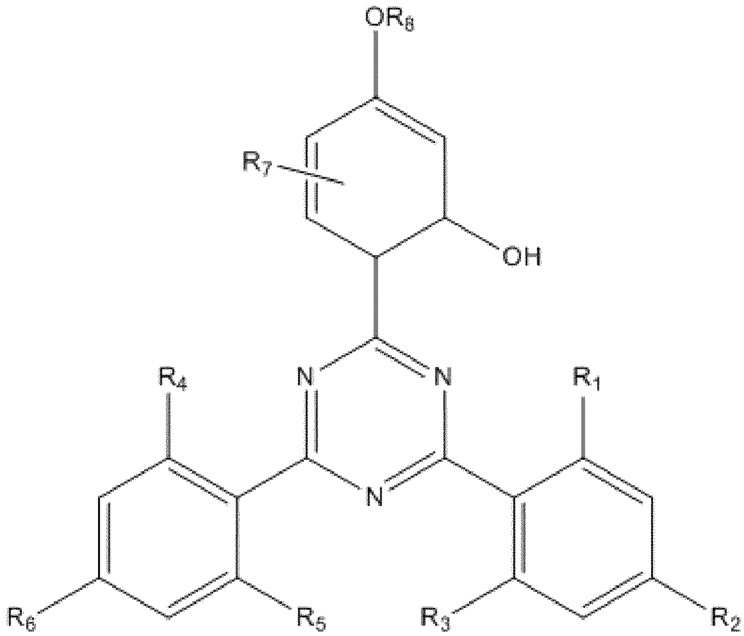

(II)

in which

$R_1$ to $R_6$ independently from one another, are H; OH; C1-C12 alkyl; C2-C6 alkenyl; C1-C12 alkoxy; C2-C18 alkenoxy; halogen; trifluoromethyl; C7-C11phenylalkyl; phenyl; phenyl which is substituted by C1-C18 alkyl, C1-C18 alkoxy or halogen; phenoxy; phenoxy which is substituted by C1-C18 alkyl, C1-C18 alkoxy or halogen; C1-C18 alkoxy; C1-C18 alkoxy which is substituted by -COOR$_7$ or OH;
$R_7$ is H; C1-C24 alkyl; C7-C16 alkylphenyl; or C5-C12 cycloalkyl; and
$R_8$ is H; C1-C18 alkyl; or C1-C18 alkoxy which may substituted by - COOR$_7$ or OH; and

a3) a 2-hydroxy benzophenone of formula (III):

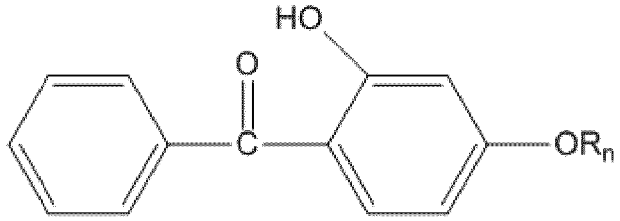

(III)

in which $R_n$ is H; or C1-C24 alkyl;

b) at least one solvent selected from the group consisting of consisting of dimethylformamyde (DMF), N-Methyl-2-pyrrolidone (NMP), dimethylacetamide (DMAc) and tetrahydrofuran (THF),
c) optionally a radical scavenger compound (RS),

to treat at least one surface of a polymer article having a UV-susceptibility, such that its ΔE value is comprised between 5 and 50, after a 5-day exposure to filtered xenon arc light, (using an Atlas ci4000 Xenon Weather-Ometer® configured with a Type S Borosilicate inner filter, a Type S Borosilicate outer filter, a irradiance at 340 nm setting of 0.3 W/$m^2$ set, a relative humidity setting of 54 %, and a temperature of 38°C) in accordance with ASTM G155-04, wherein the ΔE (Hunterlab system) is according to the following equation:

$$\Delta E = \sqrt{(\Delta L)^2 + (\Delta a)^2 + (\Delta b)^2}$$

wherein
$\Delta L$ refers to the change in darkness, that-is-to-say $\Delta L = L_{t5} - L_{t0}$, wherein $L_{t5}$ is the L value after a 5-day exposure to filtered xenon arc light and $L_{t0}$ is the initial L value of the molded polymer
$\Delta a$ refers to the change of color in the red-green axis, that-is-to-say $\Delta a = a_{t5} - a_{t0}$, wherein $a_{t5}$ is the a value after a 5-day exposure to filtered xenon arc light and $a_{t0}$ is the initial a value of the molded polymer
$\Delta b$ refers to the change of color in the blue-yellow axis, that-is-to-say $\Delta b = b_{t5} - b_{t0}$, wherein $b_{t5}$ is the a value after a 5-day exposure to filtered xenon arc light and $b_{t0}$ is the initial a value of the molded polymer.

**Patentansprüche**

**1.** Verfahren zum Behandeln mindestens einer Oberfläche eines Polymergegenstands, umfassend:

- Bereitstellen einer UV-Stabilisator-Lösung, umfassend:

a) 1,5 bis 15 Mol-% mindestens einer UV-Absorber-Verbindung (UV), ausgewählt aus der Gruppe bestehend aus:

a1) einer 2-Hydroxyphenylbenzotriazol-Verbindung der Formel (I):

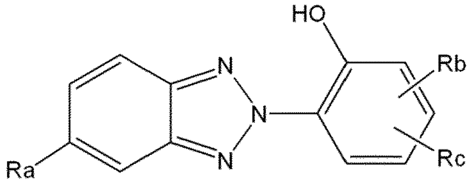

(I)

in der

$R_a$ für H; Cl; C1-C4-Alkyl; C1-C4-Alkoxy oder -$COOR_d$ steht und
$R_b$, $R_c$ und $R_d$ unabhängig voneinander für H; C1-C24-Alkyl; C7-C16-Alkylphenyl oder C5-C12-Cycloalkyl stehen; und

a2) einer 2-Hydroxyphenyltriazin-Verbindung der Formel (II):

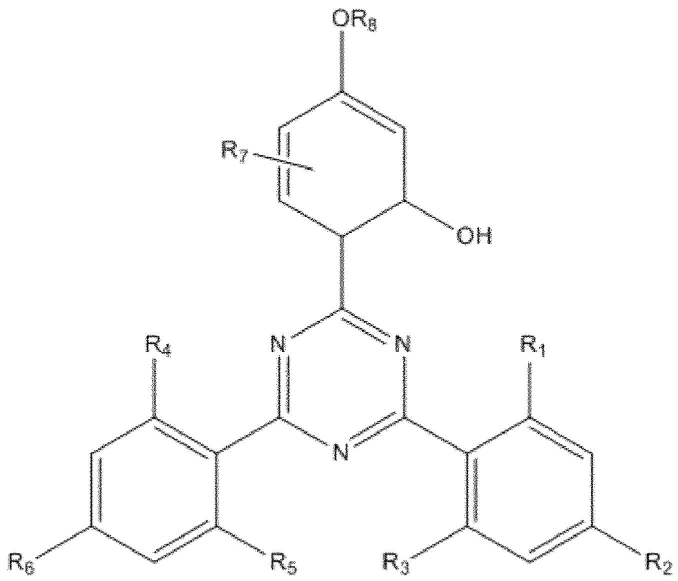

(II)

in der

$R_1$ bis $R_6$ unabhängig voneinander für H; OH; C1-C12-Alkyl; C2-C6-Alkenyl; C1-C12-Alkoxy; C2-C18-Alkenoxy; Halogen; Trifluormethyl; C7-C11-Phenylalkyl; Phenyl; Phenyl, das durch C1-C18-Alkyl, C1-C18-Alkoxy oder Halogen substituiert ist; Phenoxy; Phenoxy, das durch C1-C18-Alkyl, C1-C18-Alkoxy oder Halogen substituiert ist; C1-C18-Alkoxy; C1-C18-Alkoxy, das durch $-COOR_7$ oder OH substituiert ist; stehen;
$R_7$ für H; C1-C24-Alkyl; C7-C16-Alkylphenyl oder C5-C12-Cycloalkyl steht und
$R_8$ für H; C1-C18-Alkyl oder C1-C18-Alkoxy, das durch $-COOR_7$ oder OH substituiert sein kann, steht; und

a3) einem 2-Hydroxybenzophenon der Formel (III) :

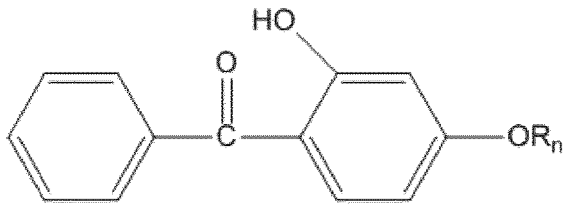

(III)

in der $R_n$ für H oder C1-C24-Alkyl steht;

b) mindestens ein Lösungsmittel, ausgewählt aus der Gruppe bestehend aus Dimethylformamid (DMF), N-Methyl-2-pyrrolidon (NMP), Dimethylacetamid (DMAc) und Tetrahydrofuran (THF),
c) gegebenenfalls eine Radikalfänger-Verbindung (RS),

- Bereitstellen eines Polymergegenstands mit einer solchen UV-Anfälligkeit, dass sein ΔE-Wert nach 5-tägiger Einwirkung von gefiltertem Xenonbogenlicht (unter Verwendung eines Atlas ci4000 Xenon Weather-Ometer® mit einem Innenfilter, einem Außenfilter aus Borosilicat vom Typ S, einer Einstellung der Bestrahlungsstärke bei 340 nm von 0,3 $W/m^2$ Sollwert, einer Einstellung der relativen Feuchtigkeit von 54 % und einer Temperatur

von 38 °C) gemäß ASTM G155-04 zwischen 5 und 50 liegt,

wobei der ΔE-Wert (Hunterlab-System) gemäß der folgenden Gleichung berechnet wird:

$$\Delta E = \sqrt{(\Delta L)^2 + (\Delta a)^2 + (\Delta b)^2}$$

wobei
$\Delta L$ sich auf die Änderung der Dunkelheit bezieht, das heißt $\Delta L = L_{t5} - L_{t0}$, wobei $L_{t5}$ der L-Wert nach 5-tägiger Einwirkung von gefiltertem Xenonbogenlicht ist und $L_{t0}$ der anfängliche L-Wert des geformten Polymers ist,
$\Delta a$ sich auf die Änderung der Farbe in der Rot-Grün-Achse bezieht, das heißt $\Delta a = a_{t5} - a_{t0}$, wobei $a_{t5}$ der a-Wert nach 5-tägiger Einwirkung von gefiltertem Xenonbogenlicht ist und $a_{t0}$ der anfängliche a-Wert des geformten Polymers ist,
$\Delta b$ sich auf die Änderung der Farbe in der Blau-Gelb-Achse bezieht, das heißt $\Delta b = b_{t5} - b_{t0}$, wobei $b_{t5}$ der a-Wert nach 5-tägiger Einwirkung von gefiltertem Xenonbogenlicht ist und $b_{t0}$ der anfängliche a-Wert des geformten Polymers ist,

- Inkontaktbringen der Oberflächenschicht des Polymergegenstands mit der UV-Stabilisator-Lösung.

**2.** Verfahren nach Anspruch 1, wobei die UV-Absorber-Verbindung aus der Gruppe der Verbindungen der Formel (IA), (IB), (IC) oder (IIA) unten ausgewählt ist:

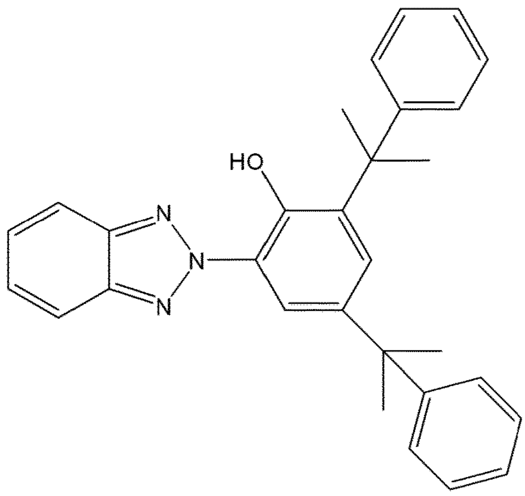

(IA)

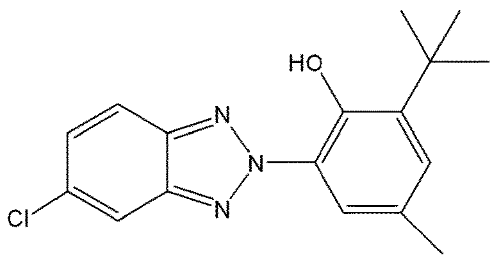

(IB)

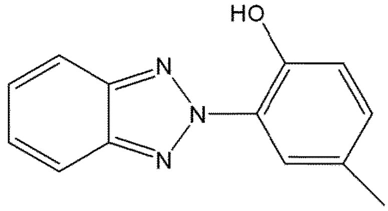

(IC)

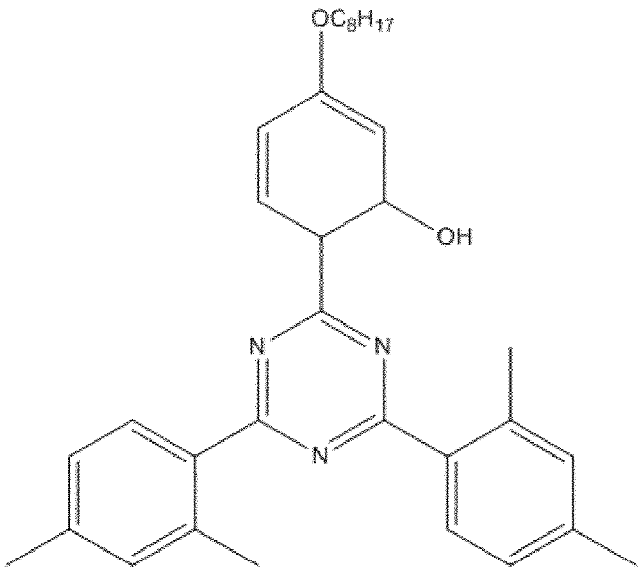

(IIA)

3. Verfahren nach Anspruch 1 oder 2, wobei der Polymergegenstand zumindest teilweise aus einer Polymerzusammensetzung (C) besteht, die ein Polymer umfasst, das aus der Gruppe bestehend aus Poly(aryletherketon) (PAEK), Poly(arylethersulfon) (PAES) und Polyarylensulfid (PAS) ausgewählt ist.

4. Verfahren nach einem der Ansprüche 1-3, wobei die UV-Stabilisator-Lösung 0,01 Mol-% bis 15 Mol-% Radikalfänger-Verbindungen (RS), bezogen auf die Gesamtzahl der Mole der Lösung, umfasst.

5. Verfahren nach einem der Ansprüche 1-4, wobei die Radikalfänger-Verbindung (RS) aus der Gruppe bestehend aus Lichtschutzmitteln vom Typ gehindertes Amin (HALS) und gehinderten phenolischen Antioxidantien (HPA) ausgewählt ist.

6. Verfahren nach einem der Ansprüche 1-4, wobei die Radikalfänger-Verbindung (RS) aus der Gruppe bestehend aus Verbindungen der Formel (IIIA), (IIIB), (IVA) und (IVB) unten ausgewählt ist:

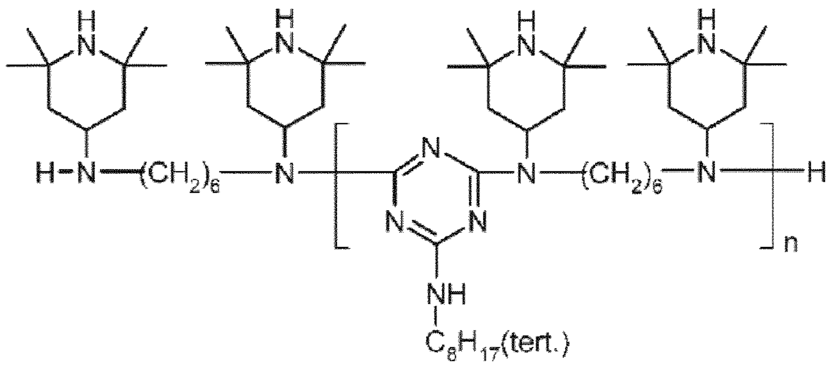

(IVA)

(mit einem Molekulargewicht von 2000 bis 3300 g/mol)

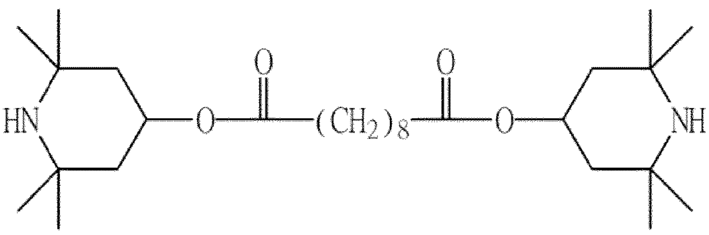

(IVB)

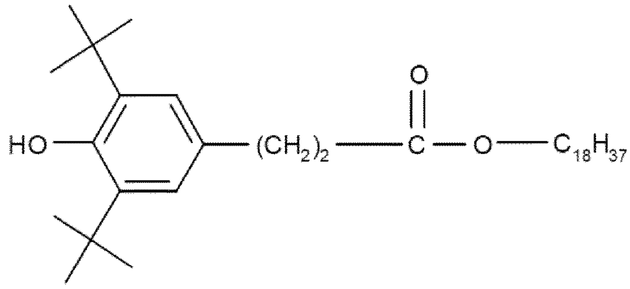

(VA)

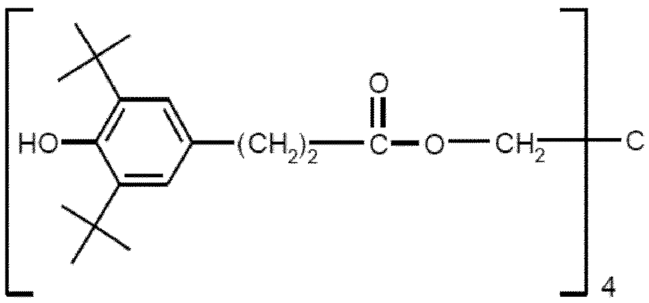

(VB) .

7. Verfahren nach einem der Ansprüche 1-5, wobei der Schritt des Inkontaktbringens durch Beschichten der Oberfläche des Gegenstands, Besprühen der Oberfläche des Gegenstands oder Eintauchen des Gegenstands in ein Bad durchgeführt wird.

8. Verfahren nach einem der Ansprüche 1-6, wobei der Schritt des Inkontaktbringens zwischen 10 und 30 °C erfolgt.

9. Behandelter Polymergegenstand, erhältlich durch das Verfahren nach einem der Ansprüche 1-7.

10. Behandelter Polymergegenstand nach Anspruch 9, enthaltend UV-Stabilisator-Verbindungen (UV) in der Oberflächenschicht des Polymergegenstands gemäß Bestimmung durch photoakustische FTIR-Messungen.

11. Behandelter Polymergegenstand nach Anspruch 10, wobei sich die Oberflächenschicht bis zu einer Tiefe von 50 µm von der Oberfläche des Gegenstands erstreckt.

12. Verwendung einer UV-Stabilisator-Lösung, umfassend:

a) 1,5 bis 15 Mol-% mindestens einer UV-Absorber-Verbindung (UV), ausgewählt aus der Gruppe bestehend aus:

a1) einer 2-Hydroxyphenylbenzotriazol-Verbindung der Formel (I):

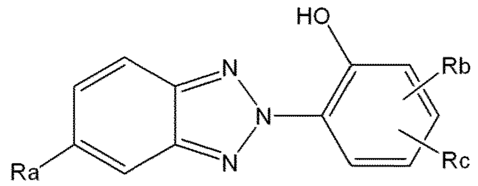

(I)

in der

$R_a$ für H; Cl; C1-C4-Alkyl; C1-C4-Alkoxy oder -$COOR_d$ steht und
$R_b$, $R_c$ und $R_d$ unabhängig voneinander für H; C1-C24-Alkyl; C7-C16-Alkylphenyl oder C5-C12-Cycloalkyl stehen;

a2) einer 2-Hydroxyphenyltriazin-Verbindung der Formel (II):

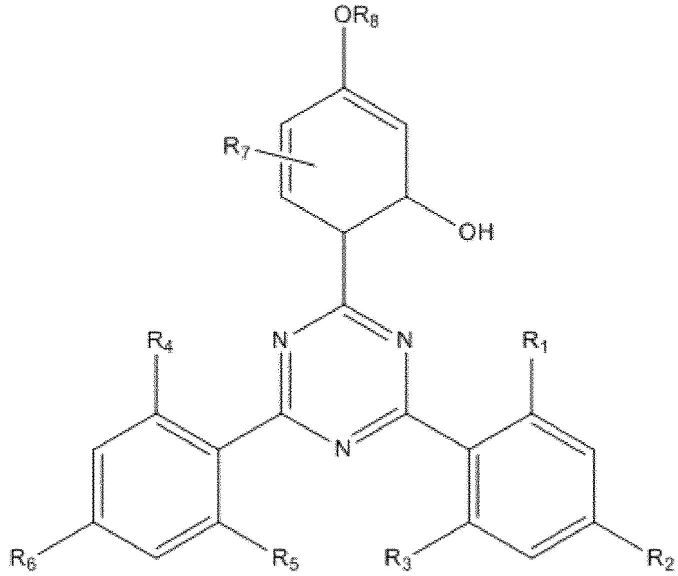

(II)

in der

$R_1$ bis $R_6$ unabhängig voneinander für H; OH; C1-C12-Alkyl; C2-C6-Alkenyl; C1-C12-Alkoxy; C2-C18-Alkenoxy; Halogen; Trifluormethyl; C7-C11-Phenylalkyl; Phenyl; Phenyl, das durch C1-C18-Alkyl, C1-C18-Alkoxy oder Halogen substituiert ist; Phenoxy; Phenoxy, das durch C1-C18-Alkyl, C1-C18-Alkoxy oder Halogen substituiert ist; C1-C18-Alkoxy; C1-C18-Alkoxy, das durch -$COOR_7$ oder OH substituiert ist; stehen;
$R_7$ für H; C1-C24-Alkyl; C7-C16-Alkylphenyl oder C5-C12-Cycloalkyl steht und
$R_8$ für H; C1-C18-Alkyl oder C1-C18-Alkoxy, das durch -$COOR_7$ oder OH substituiert sein kann, steht; und

a3) einem 2-Hydroxybenzophenon der Formel (III) :

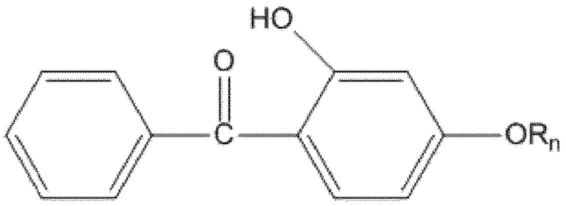

(III)

in der $R_n$ für H oder C1-C24-Alkyl steht;

b) mindestens ein Lösungsmittel, ausgewählt aus der Gruppe bestehend aus Dimethylformamid (DMF), N-Methyl-2-pyrrolidon (NMP), Dimethylacetamid (DMAc) und Tetrahydrofuran (THF),
c) gegebenenfalls eine Radikalfänger-Verbindung (RS),

zum Behandeln mindestens einer Oberfläche eines Polymergegenstands mit einer solchen UV-Anfälligkeit, dass sein ΔE-Wert nach 5-tägiger Einwirkung von gefiltertem Xenonbogenlicht (unter Verwendung eines Atlas ci4000 Xenon Weather-Ometer® mit einem Innenfilter, einem Außenfilter aus Borosilicat vom Typ S, einer Einstellung der Bestrahlungsstärke bei 340 nm von 0,3 $W/m^2$ Sollwert, einer Einstellung der relativen Feuchtigkeit von 54 % und einer Temperatur von 38 °C) gemäß ASTM G155-04 zwischen 5 und 50 liegt, wobei der ΔE-Wert (Hunterlab-System) gemäß der folgenden Gleichung berechnet wird:

$$\Delta E = \sqrt{(\Delta L)^2 + (\Delta a)^2 + (\Delta b)^2}$$

wobei
$\Delta L$ sich auf die Änderung der Dunkelheit bezieht, das heißt $\Delta L = L_{t5} - L_{t0}$, wobei $L_{t5}$ der L-Wert nach 5-tägiger Einwirkung von gefiltertem Xenonbogenlicht ist und $L_{t0}$ der anfängliche L-Wert des geformten Polymers ist,
$\Delta a$ sich auf die Änderung der Farbe in der Rot-Grün-Achse bezieht, das heißt $\Delta a = a_{t5} - a_{t0}$, wobei $a_{t5}$ der a-Wert nach 5-tägiger Einwirkung von gefiltertem Xenonbogenlicht ist und $a_{t0}$ der anfängliche a-Wert des geformten Polymers ist,
$\Delta b$ sich auf die Änderung der Farbe in der Blau-Gelb-Achse bezieht, das heißt $\Delta b = b_{t5} - b_{t0}$, wobei $b_{t5}$ der a-Wert nach 5-tägiger Einwirkung von gefiltertem Xenonbogenlicht ist und $b_{t0}$ der anfängliche a-Wert des geformten Polymers ist.

## Revendications

**1.** Procédé de traitement d'au moins une surface d'un article en polymère, comprenant :

- la fourniture d'une solution stabilisante aux UV comprenant :

a) de 1,5 à 15 % en moles d'au moins un composé (UV) choisi dans le groupe constitué de :

a1) un composé 2-hydroxyphényl-benzotriazole de formule (I) :

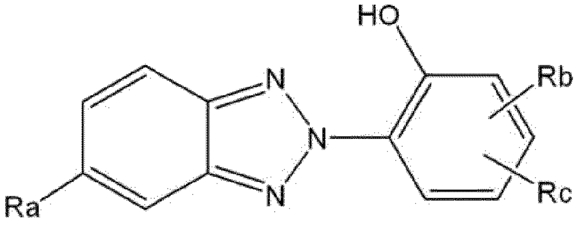

(I)

dans laquelle

$R_a$ est H ; Cl ; alkyle en C1-C4 ; alcoxy en C1-C4 ; ou -$COOR_d$ ; et
$R_b$, $R_c$ et $R_d$, indépendamment les uns des autres, sont H ; alkyle en C1-C24 ; alkylphényle en C7-C16 ; ou cycloalkyle en C5-C12 ; et

a2) un composé 2-hydroxyphényltriazine de formule (II) :

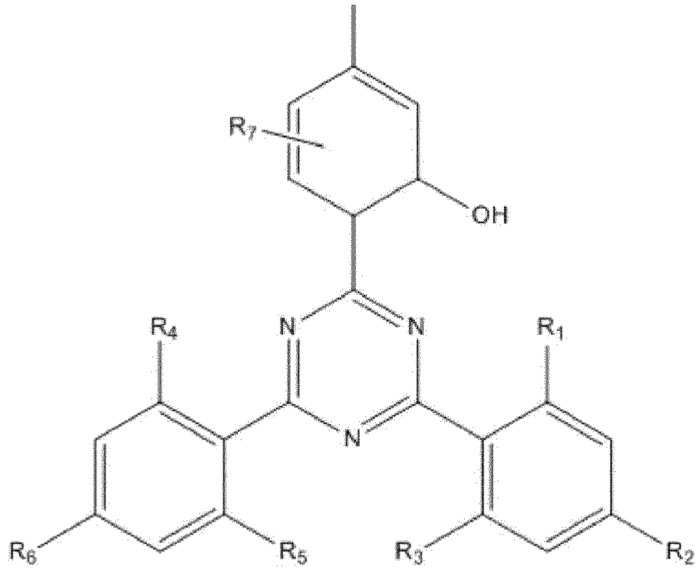

(II)

dans laquelle

$R_1$ à $R_6$, indépendamment les uns des autres, sont H ; OH ; alkyle en C1-C12 ; alcényle en C2-C6 ; alcoxy en C1-C12 ; alcénoxy en C2-C18 ; halogène ; trifluorométhyle ; phénylalkyle en C7-C11 ; phényle ; phényle qui est substitué par alkyle en C1-C18, alcoxy en C1-C18 ou halogène ; phénoxy ; phénoxy qui est substitué par alkyle en C1-C18, alcoxy en C1-C18 ou halogène ; alcoxy en C1-C18 ; alcoxy en C1-C18 qui est substitué par -$COOR_7$ ou OH ;
$R_7$ est H ; alkyle en C1-C24 ; alkylphényle en C7-C16 ; ou cycloalkyle en C5-C12 ; et
$R_8$ est H ; alkyle en C1-C18 ; ou alcoxy en C1-C18 qui peut être substitué par -$COOR_7$ ou OH ; et

a3) une 2-hydroxy benzophénone de formule (III) :

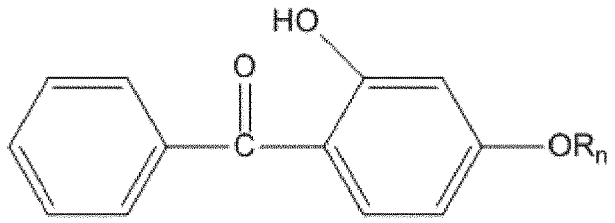

(III)

dans laquelle $R_n$ est H ; ou alkyle en C1-C24 ;

b) au moins un solvant choisi dans le groupe constitué du diméthylformamyde (DMF), de la *N*-méthyl-2-pyrrolidone (NMP), du diméthylacétamide (DMAc) et du tétrahydrofurane (THF),
c) facultativement un composé désactiveur de radicaux (RS),

- la fourniture d'un article en polymère ayant une sensibilité aux UV, de sorte que sa valeur $\Delta E$ est comprise entre 5 et 50, après 5 jours d'exposition à une lumière d'arc au xénon filtrée, (en utilisant un Atlas ci4000 Xenon Weather-Ometer® configuré avec un filtre interne en borosilicate de type S, un filtre externe en borosilicate de type S, un réglage d'éclairement énergétique à 340 nm de 0,3 $W/m^2$ défini, un réglage d'humidité relative de 54 %, et une température de 38 °C) selon ASTM G155-04,

dans lequel le ΔE (système Hunterlab) est selon l'équation suivante :

$$\Delta E = \sqrt{(\Delta L)^2 + (\Delta a)^2 + (\Delta b)^2}$$

dans laquelle
$\Delta L$ désigne le changement de noircissement, c'est-à-dire $\Delta L = L_{t5} - L_{t0}$, où $L_{t5}$ est la valeur L après 5 jours d'exposition à une lumière d'arc au xénon filtrée et $L_{t0}$ est la valeur L initiale du polymère moulé
$\Delta a$ désigne le changement de couleur dans l'axe rouge-vert, c'est-à-dire $\Delta a = a_{t5} - a_{t0}$, où $a_{t5}$ est la valeur a après 5 jours d'exposition à une lumière d'arc au xénon filtrée et $a_{t0}$ est la valeur a initiale du polymère moulé $\Delta b$ désigne le changement de couleur dans l'axe bleu-jaune, à savoir $\Delta b = b_{t5} - b_{t0}$, où $b_{t5}$ est la valeur a après 5 jours d'exposition à une lumière d'arc au xénon filtrée et $b_{t0}$ est la valeur a initiale du polymère moulé,

- la mise en contact de la couche de surface de l'article en polymère avec la solution stabilisante aux UV.

**2.** Procédé selon la revendication 1, dans lequel le composé absorbeur d'UV est choisi dans le groupe de composés de formule (IA), (IB), (IC) ou (IIA) ci-dessous :

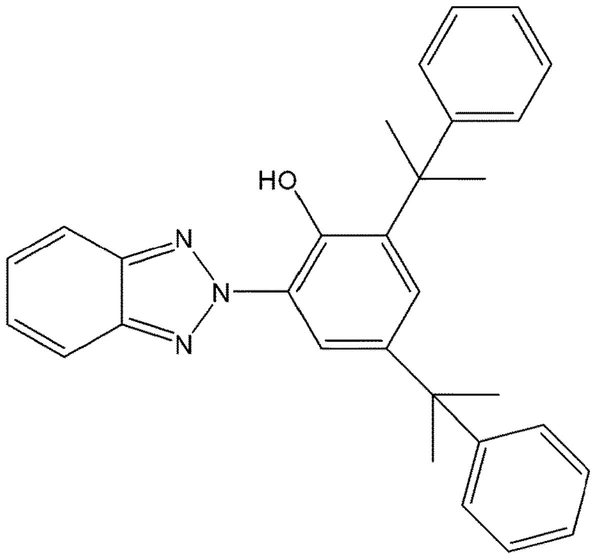

(IA)

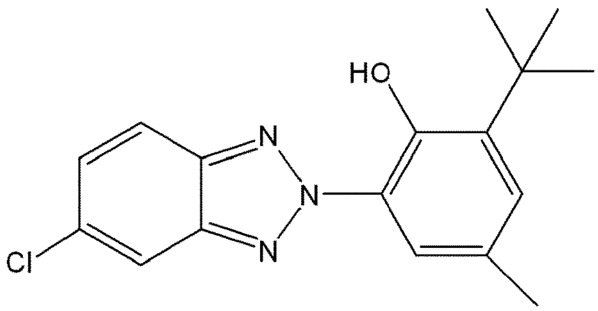

(IB)

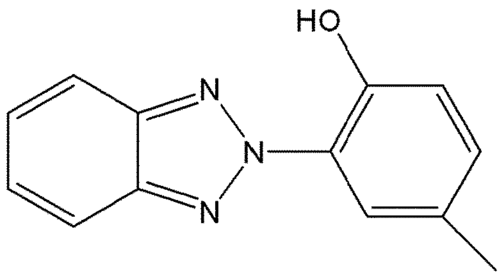

(IC)

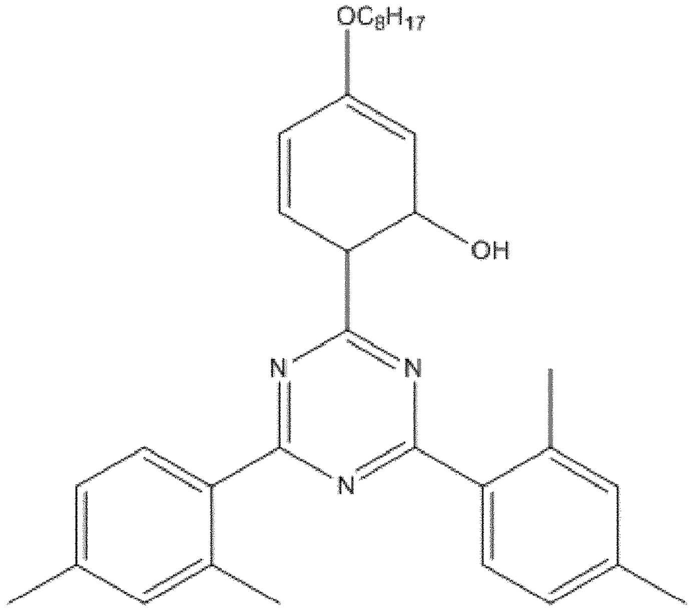

(IIA)

3. Procédé selon la revendication 1 ou 2, dans lequel l'article en polymère est constitué, au moins en partie, d'une composition de polymère (C) comprenant un polymère choisi dans le groupe constitué d'une poly(aryléthercétone) (PAEK), d'une poly(aryéthersulfone) (PAES) et d'un poly(sulfure d'arylène) (PAS).

4. Procédé selon l'une quelconque des revendications 1 à 3, dans lequel la solution stabilisante aux UV comprend de 0,01 % en moles à 15 % en moles de composés désactiveurs de radicaux (RS), sur la base du nombre total de moles de la solution.

5. Procédé selon l'une quelconque des revendications 1 à 4, dans lequel le composé désactiveur de radicaux (RS) est choisi dans le groupe constitué de photostabilisants à amine encombrée (HALS) et d'antioxydants à phénol encombré (HPA).

6. Procédé selon l'une quelconque des revendications 1 à 4, dans lequel le composé désactiveur de radicaux (RS) est choisi dans le groupe constitué de composés de formule (IIIA), (IIIB), (IVA) et (IVB) ci-dessous :

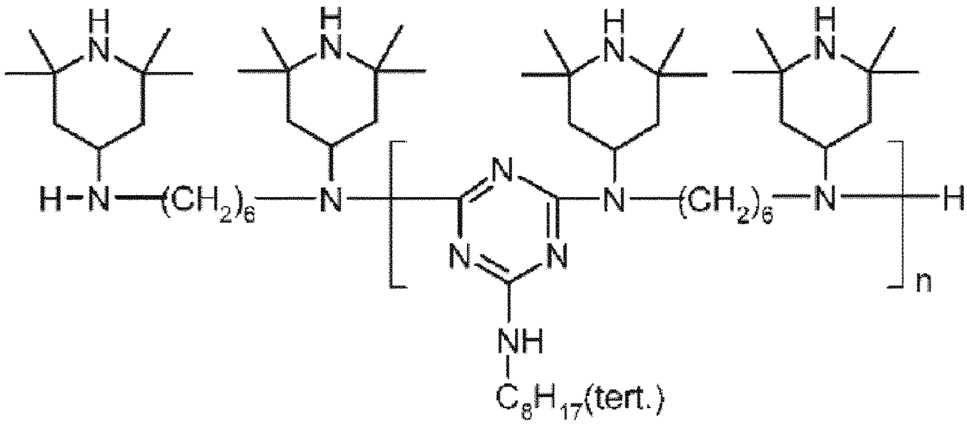

(IVA) (avec un poids moléculaire de 2000 à 3300 g/mol)

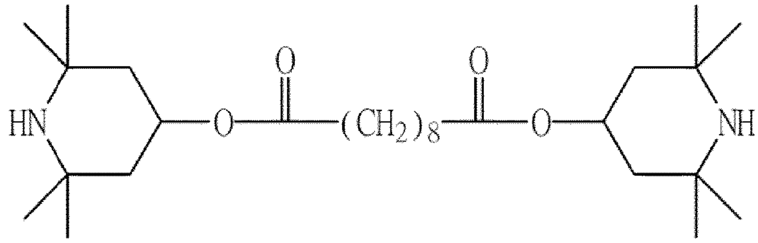

(IVB)

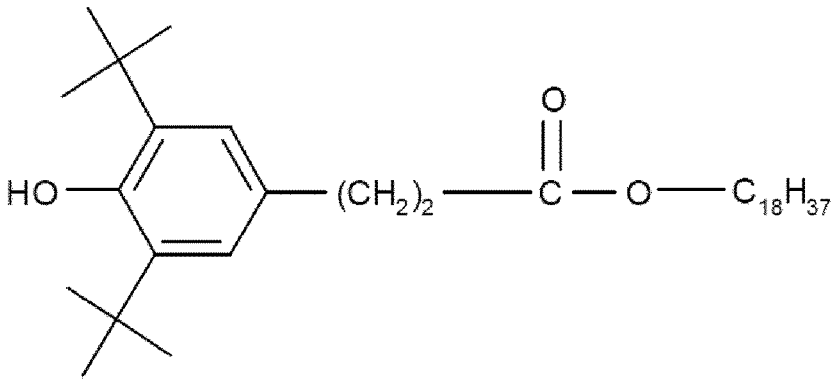

(VA)

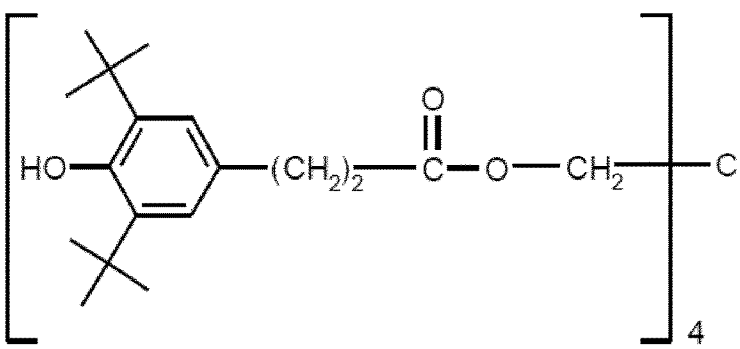

(VB).

7. Procédé selon l'une quelconque des revendications 1 à 5, dans lequel l'étape de mise en contact est mise en œuvre par revêtement de la surface de l'article, pulvérisation sur la surface de l'article ou immersion de l'article dans un bain.

**8.** Procédé selon l'une quelconque des revendications 1 à 6, dans lequel l'étape de mise en contact est conduite entre 10 et 30 °C.

**9.** Article en polymère traité pouvant être obtenu par le procédé selon l'une quelconque des revendications 1 à 7.

**10.** Article en polymère traité selon la revendication 9, incorporant des composés stabilisants aux UV (UV) dans la couche de surface de l'article en polymère, comme déterminé par des mesures FTIR photoacoustiques.

**11.** Article en polymère traité selon la revendication 10, dans lequel la couche de surface s'étend à une profondeur de 50 μm depuis la surface de l'article.

**12.** Utilisation d'une solution stabilisante aux UV comprenant :

a) de 0,1 à 15 % en moles d'au moins un composé absorbeur d'UV (UV) choisi dans le groupe constitué de :

a1) un composé de 2-hydroxyphénylbenzotriazole de formule (I) :

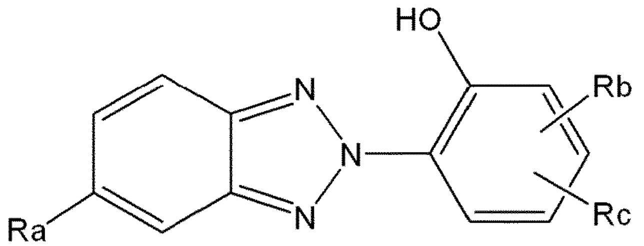
(I)

dans laquelle

$R_a$ est H ; Cl ; alkyle en C1-C4 ; alcoxy en C1-C4 ; ou -COO$R_d$ ; et
$R_b$, $R_c$ et $R_d$, indépendamment les uns des autres, sont H ; alkyle en C1-C24 ; alkylphényle en C7-C16 ; ou cycloalkyle en C5-C12 ;

a2) un composé de 2-hydroxyphényltriazine de formule (II) :

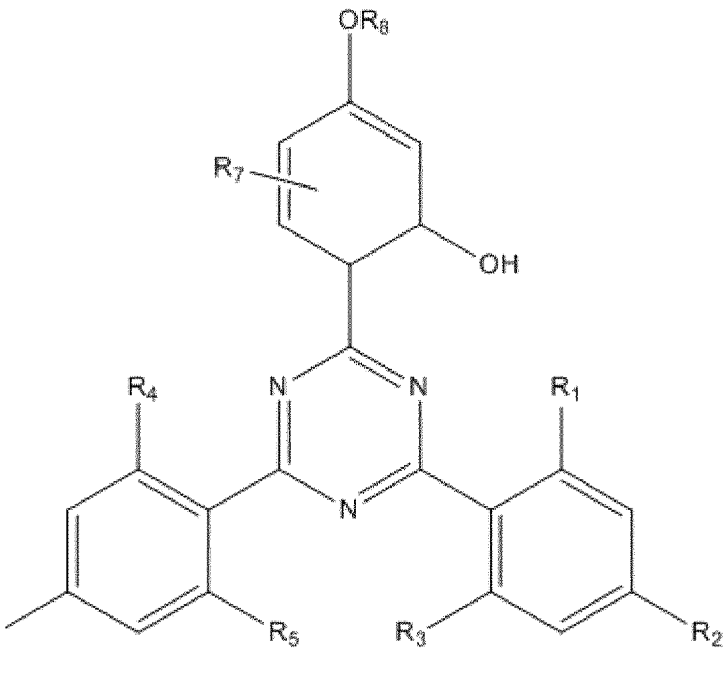
(II)

dans laquelle

$R_1$ à $R_6$ indépendamment les uns des autres, sont H ; OH ; alkyle en C1-C12 ; alcényle en C2-C6 ; alcoxy en C1-C12 ; alcénoxy en C2-C18 ; halogène ; trifluorométhyle ; phénylalkyle en C7-C11 ; phényle ; phényle qui est substitué par alkyle en C1-C18, alcoxy en C1-C18 ou halogène ; phénoxy ; phénoxy qui est substitué par alkyle en C1-C18, alcoxy en C1-C18 ou halogène ; alcoxy en C1-C18 ; alcoxy en C1-C18 qui est substitué par $-COOR_7$ ou OH ;
$R_7$ est H ; alkyle en C1-C24 ; alkylphényle en C7-C16 ; ou cycloalkyle en C5-C12 ; et
$R_8$ est H ; alkyle en C1-C18 ; ou alcoxy en C1-C18 qui peut être substitué par $-COOR_7$ ou OH ; et

a3) une 2-hydroxybenzophénone de formule (III) :

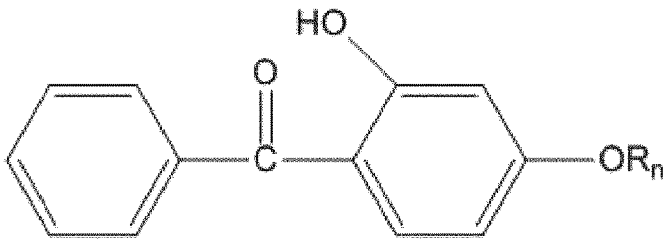

(III)

dans laquelle $R_n$ est H ; ou alkyle en C1-C24 ;

b) au moins un solvant choisi dans le groupe constitué de constitué du diméthylformamyde (DMF), de la *N*-méthyl-2-pyrrolidone (NMP), du diméthylacétamide (DMAc) et du tétrahydrofurane (THF),
c) facultativement un composé désactiveur de radicaux (RS),

pour traiter au moins une surface d'un article en polymère ayant une sensibilité aux UV, de sorte que sa valeur ΔE est comprise entre 5 et 50, après 5 jours d'exposition à une lumière d'arc au xénon filtrée, (en utilisant un Atlas ci4000 Xenon Weather-Ometer® configuré avec un filtre interne en borosilicate de type S, un filtre externe en borosilicate de type S, un réglage d'éclairement énergétique à 340 nm de 0,3 $W/m^2$ défini, a un réglage d'humidité relative de 54 %, et une température de 38 °C) selon ASTM G155-04, dans lequel le ΔE (système Hunterlab) est selon l'équation suivante :

$$\Delta E = \sqrt{(\Delta L)^2 + (\Delta a)^2 + (\Delta b)^2}$$

dans laquelle
$\Delta L$ désigne le changement de noircissement, c'est-à-dire $\Delta L = L_{t5} - L_{t0}$, où $L_{t5}$ est la valeur L après 5 jours d'exposition à une lumière d'arc au xénon filtrée et $L_{t0}$ est la valeur L initiale du polymère moulé
$\Delta a$ désigne le changement de couleur dans l'axe rouge-vert, à savoir $\Delta a = a_{t5} - a_{t0}$, où $a_{t5}$ est la valeur a après 5 jours d'exposition à une lumière d'arc au xénon filtrée et $a_{t0}$ est la valeur a initiale du polymère moulé
$\Delta b$ désigne le changement de couleur dans l'axe bleu-jaune, à savoir $\Delta b = b_{t5} - b_{t0}$, où $b_{t5}$ est la valeur a après 5 jours d'exposition à une lumière d'arc au xénon filtrée et $b_{t0}$ est la valeur a initiale du polymère moulé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62463205
- EP 17167420